# EUROPEAN PATENT SPECIFICATION

(11) **EP 4 391 744 B1**
(45) Date of publication and mention of the grant of the patent: **29.07.2026**
(21) Application number: 22866715.0
(22) Date of filing: 08.09.2022
(51) Int. Cl.: B23K 20/10, B23K 20/24, B23K 20/26, B23K 103/08, H04M 1/02

(54) **MAGNESIUM ALLOY CONNECTION STRUCTURAL MEMBER, ELECTRONIC DEVICE AND MEMBER FORMING METHOD**
VERBINDUNGSSTRUKTURELEMENT AUS MAGNESIUMLEGIERUNG, ELEKTRONISCHE VORRICHTUNG UND ELEMENTFORMUNGSVERFAHREN
ÉLÉMENT STRUCTURAL DE CONNEXION EN ALLIAGE DE MAGNÉSIUM, DISPOSITIF ÉLECTRONIQUE ET PROCÉDÉ DE FORMATION D'ÉLÉMENT

(30) Priority: 13.09.2021 CN 202111068099
(43) Date of publication of application: 26.06.2024
(73) Proprietor: Huawei Technologies Co., Ltd., Shenzhen, Guangdong 518129 (CN)
(72) Inventor: XIONG, Zhenmin, Shenzhen, Guangdong 518129 (CN); ZHANG, Shijun, Shenzhen, Guangdong 518129 (CN); LI, Heng, Shenzhen, Guangdong 518129 (CN); TANG, Wei, Shenzhen, Guangdong 518129 (CN)
(74) Representative: Maiwald GmbH
(86) International application number: PCT/CN2022/117871
(87) International publication number: WO 2023/036254

(56) References cited:
- CN-A- 106 714 487
- CN-A- 107 287 556
- CN-U- 210 167 512
- TW-A- 200 743 680

## Description

### TECHNICAL FIELD

The present invention relates to the terminal field, and in particular, to a magnesium alloy connection mechanical part, an electronic device, and a component forming method.

### BACKGROUND

With development of terminal devices, to implement a lightweight design of the terminal device, more components in the terminal device use lightweight components, for example, middle frames and camera housings of more terminal devices use components made of a magnesium alloy material.

CN210167512U describes a magnesium alloy structural member. It is described that at least one electric connection point area is arranged on the substrate; the magnesium alloy comprises a magnesium alloy body, a protective layer arranged on the surface of the magnesium alloy body and a conducting strip arranged on the protective layer in an electric connection point area, the conducting strip is connected with the magnesium alloy body through a welding point, and the conducting strip serves as an electric connection point and is used for being in electric connection with the outside after making contact with the electric connection point. It is described that according to the magnesium alloy structural part, the conducting strip is connected with the magnesium alloy body in the electric connection point area through the welding process, a protective layer in the whole electric connection point area can be prevented from being removed, contact between the magnesium alloy body and outside air is isolated, corrosion and galvanic corrosion are relieved, and stable electric connection between the magnesium alloy structural part and a mainboard and other components is achieved.

Because a magnesium alloy is active, when a component made of a magnesium alloy material in an electronic device is grounded, sealing and anti-corrosion of the component made of the magnesium alloy material further need to be considered.

### SUMMARY

The appended independent claims define the invention and its scope of protection. The appended dependent claims define embodiments of the invention. The following aspects and implementations of the summary provide examples of how technical subject matters can be combined.

To implement sealing and anti-corrosion of a component made of a magnesium alloy material when the component made of the magnesium alloy material in an electronic device is grounded, this application provides a magnesium alloy connection mechanical part, an electronic device, and a component forming method. In the magnesium alloy connection mechanical part, a transition layer that can conduct electricity is formed in a region in which a magnesium alloy body is connected to a conducting layer. In one aspect, an electrical connection between the magnesium alloy body and the conducting layer is implemented by using the transition layer, and in another aspect, the magnesium alloy body and the conducting layer are separated by using the transition layer, to avoid galvanic corrosion at a joint interface between the magnesium alloy body and the conducting layer, avoid galvanic corrosion between the transition layer and the conducting layer, and avoid galvanic corrosion between the transition layer and the magnesium alloy body, further to prolong a service life of the magnesium alloy connection mechanical part, and implement a stable electrical connection between the magnesium alloy mechanical part and a to-be-connected component.

A first aspect of this application provides a magnesium alloy connection mechanical part. The magnesium alloy connection mechanical part includes a magnesium alloy body; a protective layer wraps the magnesium alloy body, a connection through hole connecting to a surface of the magnesium alloy body is provided on the protective layer, and a transition layer is formed at a bottom of the connection through hole; and a conducting layer is formed on the transition layer. The transition layer and the conducting layer are used to electrically connect the magnesium alloy body to the outside; the connection through hole is sealed by using the transition layer or the conducting layer and a sealing material, so that the magnesium alloy body is isolated from the outside. The magnesium alloy connection mechanical part is a structure obtained after a magnesium alloy component is connected to the conducting layer.

The magnesium alloy connection mechanical part can be applied to an electrical connection solution in an electrical/electronic/communication device. The magnesium alloy body may be any one of a magnesium-zinc alloy, a magnesium-manganese alloy, a magnesium-rhenium alloy, and a magnesium-lithium alloy. The conducting layer is a metal or an alloy material with good conductivity. When the conducting layer is made of an alloy material, the conducting layer includes a base material, and the base material is a conductor whose abrasion resistance and corrosion resistance are higher than those of the magnesium alloy and whose surface resistance is lower than a preset value on a side that is away from the magnesium alloy body. The base material may be at least one of a copper alloy, an aluminum alloy, or a multi-element alloy. The protective layer includes but is not limited to at least one of protective layers such as a micro-arc oxide ceramic layer, a leather film, an anode layer, an electrophoresis film layer, and a paint coating. A forming process of the connection through hole may be breaking the protective layer, or the connection through hole is reserved in advance when the protective layer is formed. A breaking process of the connection through hole may be a process like etching or laser engraving.

In other words, in an implementation of this application, the magnesium alloy connection mechanical part includes a magnesium alloy body and a conducting layer, and a transition layer that can perform electricity is formed in a region in which the magnesium alloy body and the conducting layer are connected, and an electrical connection between the magnesium alloy body and the conducting layer is implemented by using the transition layer. At the same time, the magnesium alloy body and the conducting layer are separated by using the transition layer, to avoid galvanic corrosion caused by connection between the magnesium alloy body and the conducting layer. In addition, the magnesium alloy body is isolated from the outside by using the conducting layer, a sealing material, and the transition layer, to avoid oxidation or corrosion of the magnesium alloy body, and further avoid galvanic corrosion between structures in the magnesium alloy connection mechanical part, further to prolong a service life of the magnesium alloy connection mechanical part, and implement a stable electrical connection between the magnesium alloy mechanical part and a component like a mainboard.

In some implementations, the transition layer may be a solid solution generated based on the conducting layer and the magnesium alloy body. The transition layer may be a solid solution formed based on the conducting layer and the magnesium alloy body. A region in which the conducting layer is connected to the magnesium alloy body is a region in which the conducting layer and the magnesium alloy body are opposite to the connection through hole. Before the transition layer is formed, the conducting layer may be connected to the magnesium alloy body in advance, or may not be connected to the magnesium alloy. In a forming process, the region in which the conducting layer is connected to the magnesium alloy body is attached with each other. Alternatively, the transition layer may be a solid solution jointly generated based on the conducting layer, the magnesium alloy body, and another material. In some other alternative implementations, the transition layer may alternatively be a conductive adhesive layer disposed between a surface of the magnesium alloy body and the conducting layer.

In a possible implementation of the first aspect, in the foregoing magnesium alloy connection mechanical part, the transition layer is formed, through ultrasonic welding, in a region in which the magnesium alloy body is connected to the conducting layer, by using a part of the conducting layer and a part of the magnesium alloy body at a height. The transition layer in the foregoing magnesium alloy connection mechanical part is an electrical connection medium formed between the magnesium alloy body and the conducting layer based on an ultrasonic welding technology, for example, a solid solution. The electrical connection medium may be jointly formed based on the magnesium alloy body and the conducting layer, or may be jointly formed based on the magnesium alloy body, the conducting layer, and an intermediate layer.

In some implementations, the transition layer is a solid solution formed through ultrasonic welding, in a region in which the magnesium alloy body is connected to the conducting layer, by using a part of the conducting layer and a part of the magnesium alloy body at a height solid solution. That is, the solid solution is filled with a connection through hole at least partially in a thickness, and is separately connected to the conducting layer and the magnesium alloy body in a height direction of the connection through hole.

In some implementations, the transition layer is filled with the entire connection through hole.

In some possible implementations, a process in which the magnesium alloy body and the conducting layer form a solid solution through ultrasonic welding in a region in which the magnesium alloy and the conducting layer are connected is not specifically limited in this application. Any process in which solution treatment is performed on the magnesium alloy body and the conducting layer falls within the protection scope of this application.

In the foregoing magnesium alloy connection mechanical part, the transition layer is formed by using an ultrasonic welding technology in a joint region between the magnesium alloy body and the conducting layer. A forming manner is simple, and a bonding force between the transition layer and the conducting layer and between the transition layer and the magnesium alloy body is large. This improves mechanical performance of the magnesium alloy connection mechanical part and improves stability of a structure of the magnesium alloy connection mechanical part.

In a possible implementation of the first aspect, in the foregoing magnesium alloy connection mechanical part, a welding point of ultrasonic welding is located in a region corresponding to the connection through hole. The welding point refers to a region in which a surface layer of a welding part is protruding or concave due to a welding process after the welding is completed. It may be understood that the protrusion or concave of the surface layer of the welding part may be formed by melting and re-condensing the surface layer of the welding part, and the protrusion or concave of the surface layer of the welding part may alternatively be melting and re-condensing inside the welding part, or a change of the surface layer of the welding part caused by solid solution. The conducting layer includes a welding region and a working region, where the welding region is used to weld the magnesium alloy body, and the working region is used to cooperate with a to-be-connected component, so as to implement an electrical connection between the magnesium alloy body and the to-be-connected component by using the magnesium alloy connection mechanical part. In other words, in an implementation of this application, to prevent the magnesium alloy body from being oxidized or corroded, an outer surface of the magnesium alloy body is coated with a protective layer used to isolate the magnesium alloy body from the outside. To implement the electrical connection between the magnesium alloy body and the to-be-connected structure, only a part of the surface of the magnesium alloy body is exposed at a position of the connection through hole on the magnesium alloy body. Based on this, when the magnesium alloy connection structure is formed through welding, the welded welding point is preferably a region corresponding to the connection through hole.

For the foregoing magnesium alloy connection mechanical part, a welding point for ultrasonic welding is selected as a region corresponding to the connection through hole, and the protective layer on the surface of the magnesium alloy body does not need to be eliminated by using another process. The magnesium alloy body and the conducting layer can be welded by using a welding process, and this reduces welding difficulty.

In a possible implementation of the first aspect, in the magnesium alloy connection mechanical part, there is at least one transition layer, at least a part of the at least one transition layer at a height is embedded into the magnesium alloy body, and the at least one transition layer jointly forms a common conducting layer covering the connection through hole. A sealing material is an adhesive layer, and the adhesive layer is affixed between the protective layer and a position that is on the conducting layer and that corresponds to the protective layer, to seal the connection through hole.

In other words, in an implementation of this application, when an area of the working region of the conducting layer is large, for example, the conducting layer is a copper foil or another structure with good extensibility, a part of the region of the conducting layer covers the connection through hole, and a remaining region of the conducting layer covers a protective layer around the connection through hole. There is at least one transition layer, and the transition layers are distributed in parallel on the surface of the magnesium alloy body. That is, the transition layer includes at least one of a plurality of transition regions distributed in parallel along the surface of the magnesium alloy body. In other words, different parts of a region in which the conducting layer and the magnesium alloy body are connected form transition regions respectively. These transition regions may be interconnected, or these transition regions may be independent of each other. In some implementations, these transition regions are arrayed and distributed, in a specific order, in regions opposite to the connection through holes.

The transition layer is formed at a position at which the conducting layer is opposite to the connection through hole of the magnesium alloy body, so that an electrical connection can be implemented between the conducting layer and the magnesium alloy body when the conducting layer is not in direct contact with the magnesium alloy. In addition, an adhesive layer is disposed between another region of the conducting layer and the protective layer, so as to connect the another region of the conducting layer to the protective layer, to seal the connection through hole, that is, to isolate the magnesium alloy body from the outside.

In a possible implementation of the first aspect, in the magnesium alloy connection mechanical part, a concave portion is formed at a position that is on the conducting layer and that corresponds to the transition layer, and the concave portion is filled with a filling material.

In other words, in an implementation of this application, the concave portion may be sealed by using selective glue dispensing or resin, to avoid crack extension in the concave portion, further to affect a service life of the magnesium alloy connection mechanical part.

In a possible implementation of the first aspect, in the foregoing magnesium alloy connection mechanical part, an outer surface of the filling material is flush with an outer surface of the conducting layer, to improve aesthetics of a surface of the magnesium alloy connection mechanical part.

In a possible implementation of the first aspect, in the foregoing magnesium alloy connection mechanical part, at least a part of the transition layer at a height is embedded into the magnesium alloy body, a remaining part of the transition layer is located in the connection through hole. The conducting layer is located in the connection through hole. A spacing is formed between an inner side surface of the connection through hole and both a side surface of the transition layer and a side surface of the conducting layer, and the spacing is filled with the sealing material in a radial direction of the connection through hole, to seal the connection through hole.

In other words, in an implementation of this application, a size of the conducting layer is less than a hole diameter of the connection through hole, and the connection through hole cannot be filled with the transition layer in a radial direction of the connection through hole. In some implementations, based on an ultrasonic welding technology of a magnesium-copper hetero-alloy, the magnesium-copper hetero-alloy is ultrasonically welded to form an electrical connection medium, and a region that cannot be covered by the conducting layer and the protective layer is sealed by using glue dispensing to alleviate galvanic corrosion. Based on this, the foregoing magnesium alloy connection mechanical part can further reduce a welding area of the conducting layer, and implement anti-corrosion electrical connection of a magnesium alloy component with an ultra-small area.

In the foregoing magnesium alloy connection mechanical part, when transparent glue dispensing is used for sealing, a corrosion status of the magnesium alloy body may be clearly observed subsequently, to provide a basis for subsequent process adjustment.

In some implementations, based on an ultrasonic welding technology of a magnesium-copper hetero-alloy, an intermediate alloy is disposed in the magnesium-copper hetero-alloy, and the intermediate alloy and the magnesium-copper hetero-alloy can separately form a solid solution alloy, to form a solid solution layer. The solid solution layer and a copper alloy form an electrical connection medium and an anti-corrosion medium.

In a possible implementation of the first aspect, in the foregoing magnesium alloy connection mechanical part, an outer surface of the protective layer, an outer surface of the sealing material is flush with an outer surface of the conducting layer, to improve an aesthetic effect of a surface of the magnesium alloy connection mechanical part.

In a possible implementation of the first aspect, in the foregoing magnesium alloy connection mechanical part, at least a part of the transition layer at a height is embedded into the magnesium alloy body, and a remaining part of the transition layer is filled with the connection through hole in a radial direction of the connection through hole, to seal the connection through hole.

In a possible implementation of the first aspect, in the magnesium alloy connection mechanical part, the transition layer includes a first transition sub-layer, the first transition sublayer is formed in a region in which the magnesium alloy body and the intermediate layer are connected, and is formed by a part of the intermediate layer and a part of the magnesium alloy body at a height, and at least a part of the first transition sub-layer at a height is embedded into the magnesium alloy body; a second transition sub-layer formed on the first transition sub-layer. The second transition sub-layer is formed in a region in which the conducting layer is connected to the intermediate layer, and is formed by a part of the intermediate layer and a part of the conducting layer at a height; and the connection through hole is filled with the remaining part of the transition layer in a radial direction of the connection through hole, that is, the connection through hole is filled with the first transition sub-layer and/or the second transition sub-layer in a radial direction of the connection through hole, to seal the connection through hole. It may be understood that the first transition sub-layer and the second transition sub-layer are roughly layered structures in an extension direction, but are not limited to a standard layer structure.

In other words, in an implementation of this application, the transition layer includes a first transition sub-layer and a second transition sub-layer that are formed through ultrasonic welding based on the conducting layer, the intermediate layer, and the magnesium alloy body and that are mutually overlapped. The connection through hole is filled with at least one of the first transition sub-layer and the second transition sub-layer in a radial direction of the connection through hole, that is, the connection through hole is sealed. At the same time, at least a part of the connection through hole is filled with the first transition sub-layer and the second transition sublayer in an axial direction of the connection through hole, that is, an electrical connection between the conducting layer and the magnesium alloy body is implemented.

In some implementations, the entire connection through hole is filled with the first transition sub-layer and the second transition sub-layer. For example, the entire connection through hole is just filled with the first transition sub-layer and the second transition sub-layer. For another example, a few parts of the first transition sub-layer and the second transition sub-layer overflow from a spacing between the conducting layer and the protective layer.

In some implementations, the conducting layer covers the entire connection through hole, and after the transition layer is formed, the conducting layer may cover an upper part of the entire transition layer. Certainly, in another alternative implementation, the conducting layer may alternatively not cover the entire connection through hole, and the conducting layer and the transition layer in the connection through hole may alternatively be sealed by using the foregoing sealing material.

A second aspect of this application provides an electronic device, including any magnesium alloy connection mechanical part in the first aspect.

A third aspect of this application provides a component forming method, used to form any magnesium alloy connection mechanical part in the first aspect. The method includes: covering a connection through hole of a protective layer with a conducting layer; welding, through ultrasonic welding, the conducting layer and a magnesium alloy body at a position corresponding to the connection through hole; and affixing, by using a sealing material, the protective layer and a position that is on the conducting layer and that corresponds to the protective layer.

According to the foregoing method for forming the magnesium alloy connection mechanical part, a solid solution alloy welding layer is formed between the magnesium alloy body and the conducting layer through ultrasonic welding, and an electrical connection medium and an anti-corrosion medium are formed by using a welding layer and a copper alloy, to implement an anti-corrosion grounding solution of the magnesium alloy.

In some implementations, the anti-corrosion grounding solution of the magnesium alloy component is optimized by adjusting a contact area between a soldering tip and the conducting layer, a quantity of welding points, a distribution manner of the welding points, and a vibration frequency during welding, and adjusting a welding region and a working region in the conducting layer.

A fourth aspect of this application provides a component forming method, used to form any magnesium alloy connection mechanical part in the first aspect. The method includes: disposing a conducting layer on a surface of a magnesium alloy body in a connection through hole; welding the conducting layer and the magnesium alloy body through ultrasonic welding; and filling a spacing between a side surface of a protective layer and both a side surface of the conducting layer and a side surface of a transition layer by using a sealing material.

In the foregoing method for forming the magnesium alloy connection structure and the magnesium alloy connection mechanical part, an intermediate alloy is disposed in a magnesium-copper hetero-alloy, the intermediate alloy can form a solid solution alloy with the magnesium-copper hetero-alloy separately. After ultrasonic welding under a specific temperature condition, a solid solution alloy welding layer is formed, and the welding layer and a copper alloy form an electrical connection medium and an anti-corrosion medium. By adjusting a region of ultrasonic welding points are connected, distribution of welding points, and a vibration frequency during welding, based on a direction of integration between an ultrasonic welding region and an electrical connection working region, the anti-corrosion electrical connection of magnesium alloy components with ultra-small area is realized.

A fifth aspect of this application provides a component forming method, used to form any magnesium alloy connection mechanical part in the first aspect. The method includes: disposing an intermediate layer on a surface of a magnesium alloy body in a connection through hole, and disposing a conducting layer on the intermediate layer; welding the conducting layer, the intermediate layer, and the magnesium alloy body through ultrasonic welding, and filling a connection through hole in a radial direction of the connection through hole by using a transition layer formed by the conducting layer, the intermediate layer, and the magnesium alloy body.

### BRIEF DESCRIPTION OF DRAWINGS

FIG. 1(a) is a three-dimensional diagram of an electronic device;
FIG. 1(b) is an exploded view of an electronic device;
FIG. 1(c) is a partial enlarged view of a region P in FIG. 1(b);
FIG. 2(a) is a top view of a magnesium alloy connection mechanical part 10';
FIG. 2(b) is a sectional view of a magnesium alloy connection mechanical part 10' along a section A-A in FIG. 2(a);
FIG. 3(a) is a schematic diagram of a structure of a magnesium alloy connection mechanical part 10 according to this application;
FIG. 3(b) is a schematic diagram of distribution of a magnesium alloy body 100, a transition layer 400, and a conducting layer 300 in a magnesium alloy connection mechanical part 10 according to this application;
FIG. 3(c) is a schematic diagram of an interstitial solid solution;
FIG. 3(d) is a schematic diagram of a replaceable solid solution;
FIG. 4 is a schematic diagram of distribution of a magnesium alloy body 100", a transition layer 500", and a magnesium alloy body 100";
FIG. 5(a) is a top view of a magnesium alloy connection mechanical part 10a according to this application;
FIG. 5(b) is a sectional view of a magnesium alloy connection mechanical part 10a in FIG. 5(a) along a section B-B in FIG. 5(a);
FIG. 5(c) is a partial enlarged diagram of a magnesium alloy connection mechanical part 10a in an M₁ region in FIG. 5(b) according to this application;
FIG. 5(d) is a partial enlarged diagram of a magnesium alloy connection mechanical part 10a in an N₁ region in FIG. 5(c) according to this application;
FIG. 5(e) is another partial enlarged diagram of a magnesium alloy connection mechanical part 10a in an M₁ region in FIG. 5(b) according to this application;
FIG. 5(f) is still another partial enlarged diagram of a magnesium alloy connection mechanical part 10a in an M₁ region in FIG. 5(b) according to this application;
FIG. 5(g) is yet another partial enlarged diagram of a magnesium alloy connection mechanical part 10a in an M₁ region in FIG. 5(b) according to this application;
FIG. 6(a) is a schematic diagram of a conducting layer 300a and a magnesium alloy body 100 in a magnesium alloy connection mechanical part 10a before welding according to this application;
FIG. 6(b) is a schematic diagram of a welding process between a conducting layer 300a and a magnesium alloy body 100 in a magnesium alloy connection mechanical part 10a according to this application;
FIG. 6(c) is a schematic diagram of a magnesium alloy connection mechanical part 10a when a conducting layer 300a and a magnesium alloy body 100 in the magnesium alloy connection mechanical part 10a are welded according to this application;
FIG. 6(d) is a schematic diagram of a structure of a magnesium alloy connection mechanical part 10a according to this application;
FIG. 6(e) is a process flow diagram of forming a magnesium alloy connection mechanical part 10a according to this application;
FIG. 7(a) is a top view of a magnesium alloy connection mechanical part 10b according to this application;
FIG. 7(b) is a sectional view of a magnesium alloy connection mechanical part 10b in FIG. 7(a) along a section C-C in FIG. 7(a);
FIG. 7(c) is a partial enlarged diagram of a magnesium alloy connection mechanical part 10b in an M₂ region in FIG. 7(b) according to this application;
FIG. 7(d) is a partial enlarged diagram of a magnesium alloy connection mechanical part 10b in an N₂ region in FIG. 7(c) according to this application;
FIG. 8(a) is a schematic diagram of a conducting layer 300b and a magnesium alloy body 100 in a magnesium alloy connection mechanical part 10b before welding according to this application;
FIG. 8(b) is a schematic diagram of a welding process between a conducting layer 300b and a magnesium alloy body 100 in a magnesium alloy connection mechanical part 10b according to this application;
FIG. 8(c) is a schematic diagram of a structure of a magnesium alloy connection mechanical part 10b according to this application;
FIG. 8(d) is a process flow diagram of forming a magnesium alloy connection mechanical part 10b according to this application;
FIG. 9(a) is a top view of a magnesium alloy connection mechanical part 10c according to this application;
FIG. 9(b) is a sectional view of a magnesium alloy connection mechanical part 10c in FIG. 9(a) along a section D-D in FIG. 9(a);
FIG. 9(c) is a partial enlarged diagram of a magnesium alloy connection mechanical part 10c in an M₃ region in FIG. 9(b) according to this application;
FIG. 9(d) is a partial enlarged diagram of a magnesium alloy connection mechanical part 10c in an N₃ region in FIG. 9(c) according to this application;

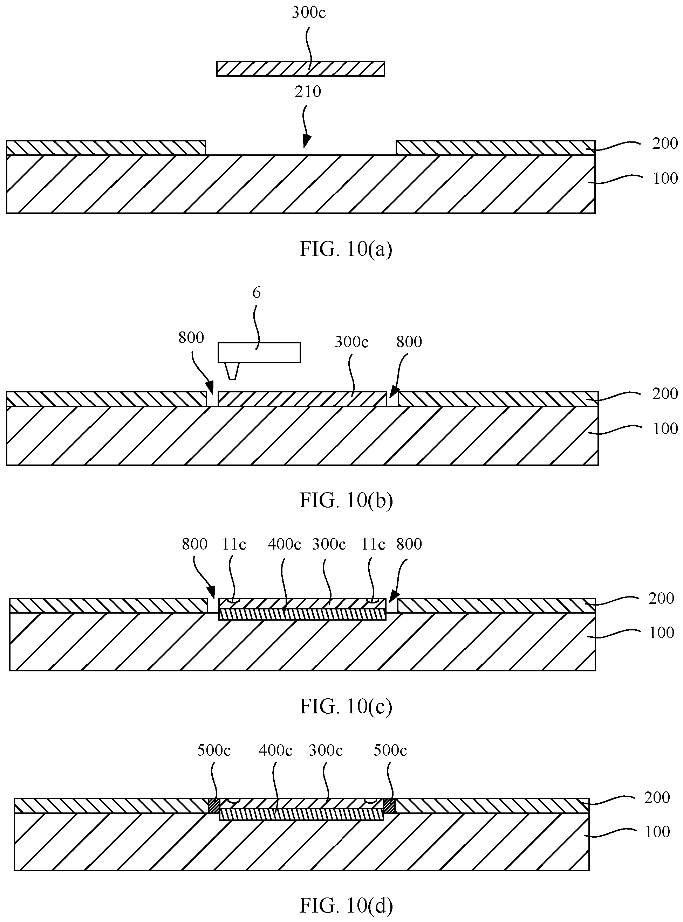

FIG. 10(a) is a schematic diagram of a conducting layer 300c and a magnesium alloy body 100 in a magnesium alloy connection mechanical part 10c before welding according to this application;
FIG. 10(b) is a schematic diagram of a welding process between a conducting layer 300c and a magnesium alloy body 100 in a magnesium alloy connection mechanical part 10c according to this application;
FIG. 10(c) is a schematic diagram of a magnesium alloy connection mechanical part 10c when a conducting layer 300c and a magnesium alloy body 100 in the magnesium alloy connection mechanical part 10c are welded according to this application;
FIG. 10(d) is a schematic diagram of a structure of a magnesium alloy connection mechanical part 10c according to this application; and

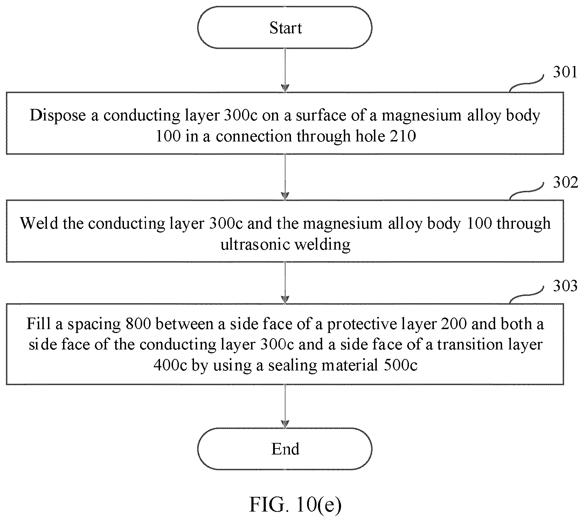

FIG. 10(e) is a process flow diagram of forming a magnesium alloy connection mechanical part 10c according to this application.

Reference numerals are as follows: 1': Electronic device; 10': Magnesium alloy connection mechanical part; 20': Ground spring plate; 2': Camera; 3': Rear housing; 4': Middle frame; 5': Display screen; 1: Electronic device; 6: Welding apparatus; 7: Heating apparatus; 10: Magnesium alloy connection mechanical part; 100: Magnesium alloy body; 200: Protective layer; 300: Conducting layer; 400: Transition layer; 500: Sealing material; S_{W}: Welding region; S_{C}: Working region; 10a: Magnesium alloy connection mechanical part; 11a: Welding point; 300a: Conducting layer; 400a: Magnesium-copper solid solution layer; 500a: Adhesive layer; 600a: Filling material; S_{W1}: First welding region; S_{W2}: First welding region; 10b: Magnesium alloy connection mechanical part; 11b: Welding point; 300b: Conducting layer; 400b: Solid solution layer; 410b: First solid solution sublayer; 420b: Second solid solution sublayer; 700: Intermediate layer; 10c: Magnesium alloy connection mechanical part; 11c: Welding point; 300c: Conducting layer; 400c: Magnesium-copper solid solution layer; and 500c: Sealing part.

### DESCRIPTION OF EMBODIMENTS

The illustrative embodiments of this application include but are not limited to a magnesium alloy connection mechanical part, an electronic device, and a component forming method.

It may be understood that the magnesium alloy connection mechanical part in this application is applied to an electrical connection solution of an electrical/electronic/communication device. The magnesium alloy connection mechanical part can provide a reliable ground point without nonlinear excitation and passive inter-modulation (Passive Inter-modulation, PIM) for an electronic device, and can further reduce electromagnetic compatibility (ElectroMagnetic Compatibility, EMC) noise or signal feeding. In other words, the magnesium alloy connection mechanical part can implement an electrical connection between a magnesium alloy component and a to-be-connected component. The electronic device may be a device like a mobile phone, a tablet, a notebook computer, or a large screen that has a magnesium alloy connection mechanical part. The magnesium alloy component includes components such as a mainboard, a liquid crystal display, a camera housing, and a middle frame. The to-be-connected component includes a ground spring plate. The magnesium alloy connection mechanical part is a region that is on the magnesium alloy component and that is used to be in contact with an external electrical connection point. The external electrical connection point is also the to-be-connected component. The following uses the magnesium alloy connection mechanical part on the camera housing as an example for description.

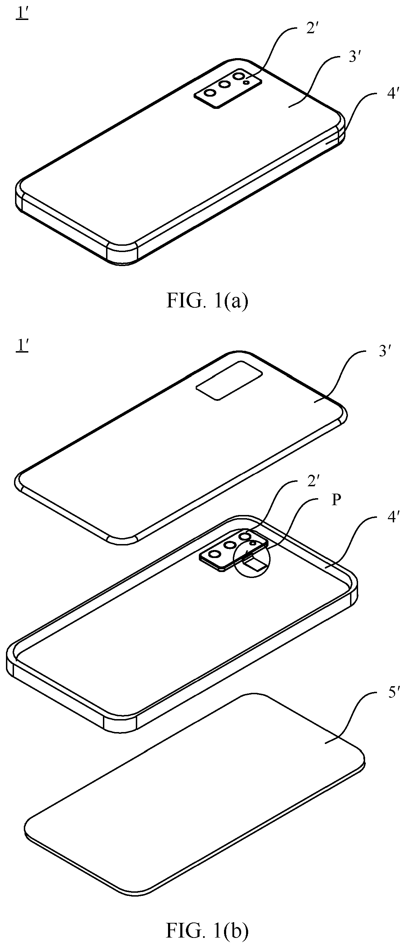

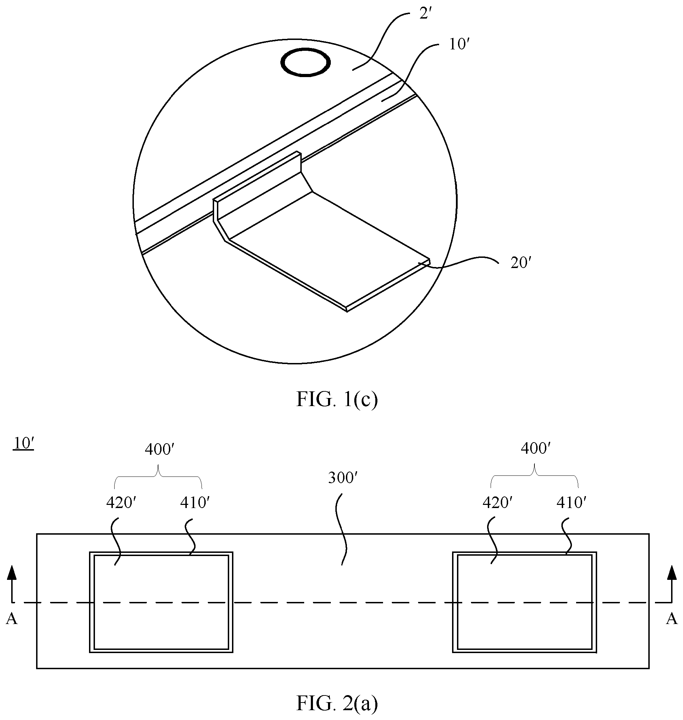

FIG. 1(a) is a three-dimensional diagram of an electronic device. FIG. 1(b) is an exploded view of an electronic device. FIG. 1(c) is a partial enlarged view of a region P in FIG. 1(b). With reference to FIG. 1(a) to FIG. 1(c), an electronic device 1' includes a camera 2', a rear housing 3', a middle frame 4', and a display screen 5' that are sequentially arranged. The camera 2' is disposed on the middle frame 4' and can pass through a mounting hole (not marked) on the rear housing 3' to complete installation of the electronic device 1'. Specifically, the camera 2' includes a magnesium alloy connection mechanical part 10', a ground spring plate 20' is disposed on the middle frame 4', and the camera 2' is elastically abutted with the ground spring plate 20' through the magnesium alloy connection mechanical part 10', to release static electricity carried by the camera 2' through the magnesium alloy connection mechanical part 10' and the ground spring plate 20'.

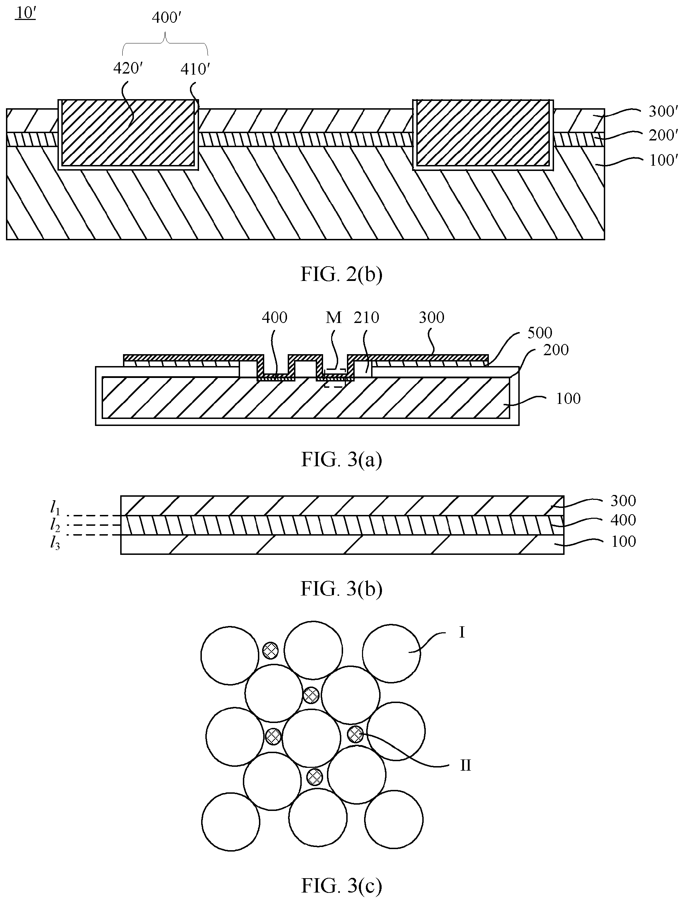

FIG. 2(a) is a top view of the magnesium alloy connection mechanical part 10'. FIG. 2(b) is a sectional view of the magnesium alloy connection mechanical part 10' along a section A-A in FIG. 2(a). With reference to FIG. 2(a) and FIG. 2(b), it can be learned that this application provides the magnesium alloy connection mechanical part 10', and at least one electrical connection point region 400' is disposed on the magnesium alloy connection mechanical part 10'. Specifically, the magnesium alloy connection mechanical part 10' includes a magnesium alloy body 100', a protective layer 200' disposed on a surface of the magnesium alloy body 100', and a conducting layer 300' disposed on the protective layer 200' in the electrical connection point region 400'. The conducting layer 300' is connected to the magnesium alloy body 100' through a welding point, and the conducting layer 300' is used as an electrical connection point to form an electrical connection with the outside after contact. The magnesium alloy connection mechanical part 10' connects the conducting layer 300' to the magnesium alloy body 100' by using a welding process, for example, laser welding, in the electrical connection point region 400', and the protective layer 200' in the entire electrical connection point region 400' does not need to be removed. The welding point shown in FIG. 2(a) refers to a region obtained after the conducting layer 300', the protective layer 200', and the magnesium alloy body 100' are melted and re-solidified during welding, and a surface layer of a welding part is protruded or concaved due to the welding point.

In the foregoing technical solution, in the electrical connection point region 400' of the magnesium alloy connection mechanical part 10', the conducting layer 300' is connected to the magnesium alloy body 100' by using a welding process. Although contact between the magnesium alloy body 100' and external air can be effectively isolated, air corrosion and galvanic corrosion can be mitigated, and the magnesium alloy connection mechanical part 10' is electrically connected to an external ground spring plate, the electrical connection point region 400' of the magnesium alloy connection mechanical part 10' is directly exposed to air. In addition, because most of the electrical connection point region 400' is a magnesium alloy, the electrical connection point region 400' is easily oxidized and corroded. After a long time of use, the magnesium alloy body 100' connected to the electrical connection point region 400' may even be corroded, and a service life of an electronic device is shortened. In addition, based on a limit forming size of laser spot welding, a size of the electrical connection point region 400' is large. As a result, an area proportion of the conducting layer 300' used for electrical connection is not high. When required electrical connection areas are the same, an area of the conducting layer 300' needs to be increased, and this increases a layout difficulty and increases material costs of the magnesium alloy connection mechanical part 10'. Finally, the electrical connection point region 400' is a structure formed after melting and then solidification, so that bonding strength of the electrical connection point region 400' and the conducting layer 300' is not high, a magnesium-copper eutectic alloy exists in a middle region of the electrical connection point region 400', and a spacing inevitably exists in a grain boundary of a eutectic alloy, resulting in small shear strength of a welding point.

To resolve the foregoing problem, this application provides a magnesium alloy connection mechanical part 10. As shown in FIG. 3(a), in the magnesium alloy connection mechanical part 10, a transition layer 400 that can conduct electricity is formed in a region in which a magnesium alloy body 100 is connected to a conducting layer 300. In one aspect, the magnesium alloy body 100 is electrically connected to the conducting layer 300 through the transition layer 400. In another aspect, as shown in FIG. 3(b), the transition layer 400 is a layer structure formed in a contact region between the magnesium alloy body 100 and the conducting layer 300. The transition layer 400 separates the magnesium alloy body 100 from the conducting layer 300, so that the magnesium alloy body 100 is separated from the conducting layer 300 by using the transition layer 400, to avoid galvanic corrosion at a joint interface between the magnesium alloy body 100 and the conducting layer 300, and further prolong a service life of the magnesium alloy connection mechanical part 10. Specifically, as shown in FIG. 3(a), the magnesium alloy connection mechanical part 10 includes the magnesium alloy body 100, a protective layer 200, the conducting layer 300, and the transition layer 400. The protective layer 200 wraps the magnesium alloy body 100, and the protective layer 200 is provided with a connection through hole 210 connected to a surface of the magnesium alloy body 100. The transition layer 400 is formed at a bottom of the connection through hole 210. The conducting layer 300 is formed on the transition layer 400. The transition layer 400 and the conducting layer 300 are configured to electrically connect the magnesium alloy body 100 to the outside. The magnesium alloy connection mechanical part 10 seals the connection through hole 210 by using the transition layer 400, so that the magnesium alloy body 100 is isolated from the outside. Alternatively, the magnesium alloy connection mechanical part 10 seals the connection through hole 210 by using the conducting layer 300 and a sealing material 500, so that the magnesium alloy body 100 is isolated from the outside.

For ease of description, a joint interface between the conducting layer 300 and the transition layer 400 is marked as l₁, a joint interface between the transition layer 400 and the magnesium alloy body 100 is marked as l₃, and a surface of the magnesium alloy body 100 is marked as l₂. It may be understood that the surface of the magnesium alloy body 100 is marked as l₂ and is located at any position between the joint interface marked as l₁ between the conducting layer 300 and the transition layer 400 and the joint interface marked as l₃ between the transition layer 400 and the magnesium alloy body 100. This is not specifically limited in this application.

In some implementations, the transition layer 400 is a solid solution formed based on the magnesium alloy body 100 and the conducting layer 300. The transition layer 400 is distributed between the magnesium alloy body 100 and the conducting layer 300, and is separately connected to the magnesium alloy body 100 and the conducting layer 300. The solid solution is an alloy phase in which solute atoms are dissolved into a solvent lattice and still maintain a solvent type.

Generally, based on different positions of the solute atoms in the solvent lattice, the solute atoms may be classified into a replaceable solid solution, an interstitial solid solution, and a mixed solid solution, where the mixed solid solution refers to a solid solution having both the interstitial solid solution and the replaceable solid solution.

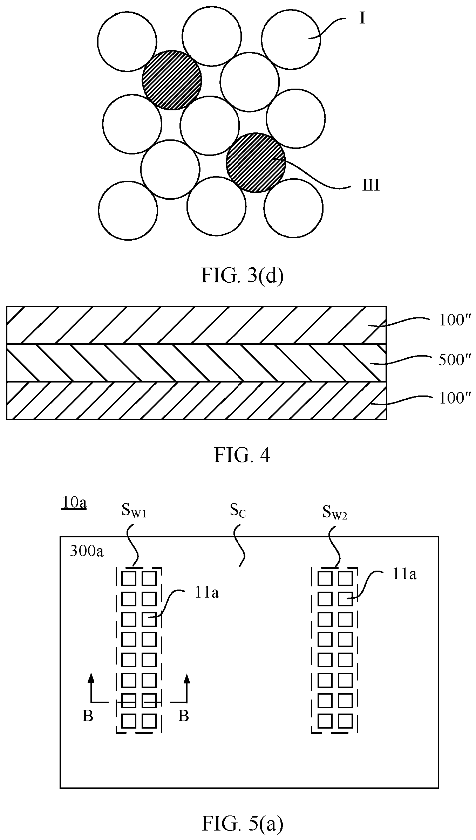

The interstitial solid solution refers to the solid solution formed by the solute atoms distributed in a spacing of solvent lattices. For example, as shown in FIG. 3(c), a solvent I of the solid solution is a transition metal with a large diameter, and a solute II is a non-metal element like carbon and hydrogen with a small diameter. The replaceable solid solution is a solid solution formed by the solute atom occupying a node position in the solvent lattice. For example, as shown in FIG. 3(d), a difference of atomic diameters of the solvent I and a solute III are not great, and a replaceable solid solution is easily formed. Metal elements generally form replaceable solid solutions between each other, but solubility varies depending on different elements. There are many factors affecting the solubility of the solid solution, mainly depending on a plurality of factors such as a crystal structure, an atomic size, chemical affinity, and atomic valency. It may be understood that, for ease of description of solution treatment in the following, a common concept of the solid solution is first supplemented herein: solid solubility. The solid solubility refers to solubility of a metal in a solid state.

In some implementations, a magnesium-aluminum solid solution formed by a magnesium alloy and an aluminum alloy, a copper-zinc solid solution formed by a copper or copper alloy and a zinc alloy, and a magnesium-copper solid solution formed by the magnesium alloy and the copper alloy are generally replaceable solid solutions. In addition, because an atomic radius of a magnesium atom is similar to an atomic radius of an aluminum atom, and an atomic radius of a copper atom is similar to an atomic radius of a zinc atom, that is, solid solubility of the magnesium-aluminum solid solution and the copper-zinc solid solution is large, and because the atomic radius of the magnesium atom is much different from the atomic radius of the copper atom, solid solubility of the magnesium-copper solid solution is small.

In some implementations, solid solubility of the replaceable solid solution in the magnesium alloy connection mechanical part 10 is greater than or equal to 0.1%.

In some implementations, a forming process for replacing a solid solution between the magnesium alloy body 100 and the conducting layer 300 in the magnesium alloy connection mechanical part 10 is ultrasonic welding. Both a size of the magnesium alloy body 100 and a size of the conducting layer 300 meet an ultrasonic welding process. The following describes in detail the size of the magnesium alloy body 100, the size of the conducting layer 300, and the ultrasonic welding process with reference to an application scenario. It may be understood that, in some application scenarios, an ultrasonic welding process and an intermediate layer may be further used, as shown in FIG. 4, a transition layer 500" may be formed between a first magnesium alloy body 100" and a second magnesium alloy body 100", to implement a connection between the first magnesium alloy body 100" and the second magnesium alloy body 100".

In another alternative implementation, the transition layer 400 in the magnesium alloy connection mechanical part 10 is an electrically conductive adhesive layer. The magnesium alloy connection mechanical part 10 is connected to the magnesium alloy body 100 and the conducting layer 300 through the electrically conductive adhesive layer, and implements an electrical connection between the magnesium alloy body 100 and the conducting layer 300 by using conductivity of the electrically conductive adhesive layer. Finally, the magnesium alloy body 100 is separated from the conducting layer 300 by using the electrically conductive adhesive layer, to avoid galvanic corrosion at a joint interface between the magnesium alloy body 100 and the conducting layer 300.

Based on an ultrasonic welding technology of the magnesium alloy body 100 and the conducting layer 300, the magnesium alloy connection mechanical part 10 forms an electrical connection medium through ultrasonic welding between the magnesium alloy body 100 and the conducting layer 300, so that the magnesium alloy body 100 and the conducting layer 300 are stably electrically connected in a non-contact manner. In addition, a connection through hole 210 is sealed to isolate the magnesium alloy body 100 from the outside, to further reduce oxidation of the magnesium alloy body 100 and galvanic corrosion at a joint interface between the magnesium alloy body 100 and the conducting layer 300, prolong a service life of the magnesium alloy connection mechanical part 10, and further prolong a service life of an electronic device. It may be understood that the joint interface between the magnesium alloy body 100 and the conducting layer 300 may be a contact interface when the magnesium alloy body 100 is in contact with the conducting layer 300 in some application scenarios.

Currently, the following several magnesium alloy connection mechanical parts 10 and forming manners of the magnesium alloy connection mechanical parts 10 are mainly included. With reference to a specific application scenario, the following describes a related technical solution from three aspects: a specific structure of the magnesium alloy connection mechanical part 10, a structure composition of the magnesium alloy connection mechanical part 10 before forming, and a forming process of the magnesium alloy connection mechanical part 10.

It may be understood that the conducting layer 300 is a metal or an alloy material with good conductivity. In some implementations, when the conducting layer 300 is made of an alloy material, the conducting layer 300 includes a base material, and the base material is a conductor whose abrasion resistance and corrosion resistance are higher than those of the magnesium alloy and whose surface resistance is less than 0.5 ohms on a side that is away from the magnesium alloy body 100. The base material may be at least one of a copper alloy, an aluminum alloy, or a multi-element alloy, and a thickness of the base material is 0.08 mm to 0.6 mm. The conducting layer 300 further includes an anti-corrosion layer disposed on a surface of the base material. The anti-corrosion layer includes a nickel layer disposed on two opposite surfaces of the base material, and a gold layer disposed on a nickel layer on a side that is of the base material and that is away from the magnesium alloy body 100. A thickness of the anti-corrosion layer is 0.0005 mm to 0.05 mm. In conclusion, the conducting layer 300 is not specifically limited in this application.

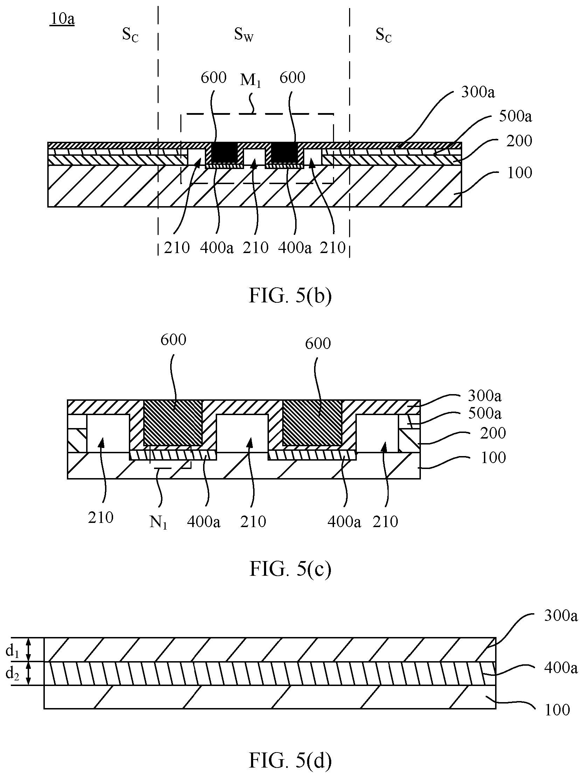

FIG. 5(a) is a top view of a magnesium alloy connection mechanical part 10a. FIG. 5(b) is a sectional view of the magnesium alloy connection mechanical part 10a along a section B-B in FIG. 5(a).

In some application scenarios, refer to FIG. 5(a). A conducting layer 300a in the magnesium alloy connection mechanical part 10a may be a copper foil, a welding region Sw is formed in a local region of the conducting layer 300a, and the welding region S_{W} includes several welding points 11a that are centrally distributed. Regions other than the welding region S_{W} on the conducting layer 300a are working regions S_{c}.

It may be understood that the conducting layer 300a may alternatively be another conducting material with good extensibility. This is not specifically limited in this application.

As shown in FIG. 5(a), the conducting layer 300a includes a first welding region S_{W1} and a second welding region S_{W2}. The first welding region S_{W1} includes welding points 11a distributed in an array of two columns and eight rows, and the second welding region S_{W2} includes welding points 11a distributed in an array of two columns and eight rows. The welding point refers to a region in which a surface layer of a welding part is protruded or concaved due to a welding process after the welding is completed. The protrusion or concave of the surface layer of the welding part may be formed by melting and re-condensing the surface layer of the welding part, and the protrusion or concave of the surface layer of the welding part may alternatively be melting and re-condensing inside the welding part, or a change of the surface layer of the welding part caused by solution treatment.

It is not difficult to find from FIG. 5(a) that the welding points 11a in the first welding region S_{W1} are centrally distributed, and the welding points 11a in the second welding region S_{W2} are centrally distributed. All areas other than the first welding region S_{W1} and the second welding region S_{W2} on the conducting layer 300a are working regions S_{C}, and a ground area required by the magnesium alloy connection mechanical part 10a is large. It may be understood that, because the conducting layer 300a has good extensibility, the conducting layer 300a can be formed to a large area size under a specific thickness. Based on this, the foregoing application scenario is particularly applicable to an application scenario in which a ground area of the magnesium alloy connection mechanical part 10a is large.

In some implementations, the ground area of the magnesium alloy connection mechanical part 10a is adjusted by adjusting an area of the conducting layer 300a, which is less difficult and convenient to operate.

As shown in FIG. 5(b), this application provides a magnesium alloy connection mechanical part 10a. A conducting layer 300a is a copper foil, a transition layer 400 is a magnesium-copper solid solution layer 400a, and a sealing material 500 is an adhesive layer 500a. In this application, based on an ultrasonic welding technology of a magnesium-copper hetero-alloy, the conducting layer 300a and a magnesium alloy body 100 are ultrasonically welded on a contact interface between the conducting layer 300a and the magnesium alloy body 100 to form the magnesium-copper solid solution layer 400a. The conducting layer 300a and the magnesium-copper solid solution layer 400a may be used as an electrical connection medium for connecting the magnesium alloy body 100 to a ground spring plate. For a region that the conducting layer 300a is opposite to a protective layer 200, for example, a region between the conducting layer 300a and the protective layer 200 after the conducting layer 300a is flattened. Because the region cannot be connected by forming the magnesium-copper solid solution layer 400a, the conducting layer 300a and the protective layer 200 are affixed in the region by using the adhesive layer 500a. It can be learned from FIG. 5(b) that a position of a connection through hole 210 is a welding region S_{W} of the magnesium alloy connection mechanical part 10a, and a position of the conducting layer 300a in the magnesium alloy connection mechanical part 10a other than the connection through hole 210 is a working region S_{C}. It may be understood that the welding region S_{W} is a region used to mechanically connect and electrically connect the conducting layer 300a to the magnesium alloy body 100, and the working region S_{C} is a region used to elastically ground connect the conducting layer 300a to an external ground spring plate.

Specifically, the magnesium alloy connection mechanical part 10a includes the magnesium alloy body 100, the protective layer 200, the conducting layer 300a, the magnesium-copper solid solution layer 400a, and the adhesive layer 500a. The protective layer 200 wraps the magnesium alloy body 100. The protective layer 200 is provided with a connection through hole 210 connected to a surface of the magnesium alloy body 100. The magnesium-copper solid solution layer 400a is formed at the bottom of the connection through hole 210. The conducting layer 300a is formed on the magnesium-copper solid solution layer 400a. The magnesium-copper solid solution layer 400a and the conducting layer 300a are used to electrically connect the magnesium alloy body 100 to an external ground spring plate.

In the foregoing magnesium alloy connection mechanical part 10a, first, the connection through hole 210 is sealed by using the adhesive layer 500a, the conducting layer 300a, and the magnesium-copper solid solution layer 400a, that is, a barrier is formed between the magnesium alloy body 100 and the outside by using the adhesive layer 500a, the conducting layer 300a, and the magnesium-copper solid solution layer 400a, to isolate the magnesium alloy body 100 from the outside, and avoid oxidation or corrosion of the magnesium alloy body 100. Second, the magnesium alloy body 100 is electrically connected to the external ground spring plate by using the conducting layer 300a and the magnesium-copper solid solution layer 400a, that is, the magnesium alloy body 100, the conducting layer 300a, and the magnesium-copper solid solution layer 400a jointly form a ground functional unit, to implement grounding of the magnesium alloy connection mechanical part 10a. Third, the conducting layer 300a, the adhesive layer 500a, the protective layer 200, and the magnesium-copper solid solution layer 400a jointly form an anti-corrosion layer for the magnesium alloy body 100, to reduce galvanic corrosion between the conducting layer 300a and the magnesium alloy body 100 in the magnesium alloy connection mechanical part 10, and prolong a service life of the magnesium alloy connection mechanical part 10a. Finally, an area occupied by a welding point of the magnesium alloy connection mechanical part 10a occupies a low proportion, and this increases an actual effective area of the conducting layer 300a, so as to reduce an area of the conducting layer 300a, optimize space arrangement, and reduce material costs.

After an overall structure of the magnesium alloy connection mechanical part 10a is described, the following describes in detail a distribution position of the magnesium-copper solid solution layer 400a (the transition layer 400) in the magnesium alloy connection mechanical part 10a and a size of the magnesium-copper solid solution layer 400a in the magnesium alloy connection mechanical part 10a.

FIG. 5(c) is a partial enlarged diagram of a magnesium alloy connection mechanical part 10a in an M₁ region in FIG. 5(b). In some implementations, as shown in FIG. 5(c), the magnesium-copper solid solution layer 400a is formed in a region in which the conducting layer 300a and the magnesium alloy body 100 are connected before the magnesium alloy connection mechanical part 10a is formed, and the region is located at a bottom of the connection through hole 210. A part of the magnesium-copper solid solution layer 400a is embedded into the magnesium alloy body 100, and the other part protrudes from a surface of the magnesium alloy body 100 and is connected to a lower surface of the conducting layer 300a.

FIG. 5(d) is a partial enlarged diagram of a magnesium alloy connection mechanical part 10a in an N₁ region in FIG. 5(c). In some implementations, as shown in FIG. 5(d), the conducting layer 300a, the magnesium-copper solid solution layer 400a, and the magnesium alloy body 100 are sequentially disposed in parallel, and the magnesium-copper solid solution layer 400a is configured to implement an electrical connection between the conducting layer 300a and the magnesium alloy body 100 when the conducting layer 300a is separated from the magnesium alloy body 100. It may be understood that, in this application, a thickness d₁ of the conducting layer 300a, a thickness d₂ of the magnesium-copper solid solution layer 400a, and an arrangement position of the magnesium-copper solid solution layer 400a are not specifically limited. Any arrangement solution that can implement a stable mechanical connection and mechanical-electrical connection between the conducting layer 300a and the magnesium alloy body 100 and that enables the conducting layer 300a and the magnesium alloy body 100 to be arranged at intervals falls within the protection scope of this application.

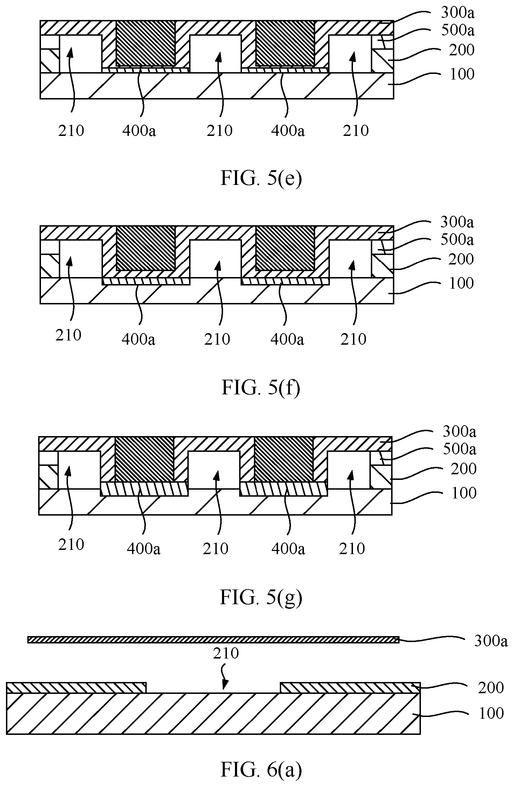

FIG. 5(e) is a partial enlarged diagram of a magnesium alloy connection mechanical part 10a in an M₁ region in FIG. 5(b). In some implementations, as shown in FIG. 5(e), the magnesium-copper solid solution layer 400a is formed in a region in which the conducting layer 300a and the magnesium alloy body 100 are connected before the magnesium alloy connection mechanical part 10a is formed, and the region is located at a bottom of the connection through hole 210. The magnesium-copper solid solution layer 400a is disposed on an upper surface of the magnesium alloy body 100 and is connected to a lower surface of the conducting layer 300a.

FIG. 5(f) is a partial enlarged diagram of a magnesium alloy connection mechanical part 10a in an M₁ region in FIG. 5(b). In some implementations, as shown in FIG. 5(f), the magnesium-copper solid solution layer 400a is formed in a region in which the conducting layer 300a and the magnesium alloy body 100 are connected before the magnesium alloy connection mechanical part 10a is formed, and the region is located at a bottom of the connection through hole 210. The magnesium-copper solid solution layer 400a is embedded into the magnesium alloy body 100 and is connected to a lower surface of the conducting layer 300a.

FIG. 5(g) is a partial enlarged diagram of a magnesium alloy connection mechanical part 10a in an M₁ region in FIG. 5(b). In some implementations, as shown in FIG. 5(g), the magnesium-copper solid solution layer 400a is formed in a region in which the conducting layer 300a and the magnesium alloy body 100 are connected before the magnesium alloy connection mechanical part 10a is formed, and the region is located at a bottom of the connection through hole 210. A part of the magnesium-copper solid solution layer 400a is embedded into the magnesium alloy body 100, and the other part is connected to the conducting layer 300a. In addition, at the welding point 11a, all the conducting layer 300a and the magnesium alloy body 100 form the magnesium-copper solid solution layer 400a.

In some implementations, in the magnesium alloy connection mechanical part 10a, the adhesive layer 500a may be insulation Mylar, or may be another non-conductive adhesive material. When the adhesive layer 500a may be insulation Mylar, the insulation Mylar has a binder, and a cut opposite to the connection through hole 210 is reserved in the insulation Mylar. The insulation Mylar and the conducting layer 300a form a composite material.

The magnesium alloy connection mechanical part 10a seals the magnesium alloy body 100 by using the insulation Mylar and the composite material, to reduce galvanic corrosion between magnesium-copper hetero-alloys, prolong a service life of the magnesium alloy connection mechanical part 10a, and further prolong a service life of an electronic device.

In some implementations, the conducting layer 300a is ultrasonically welded to the magnesium alloy body 100 through the connection through hole 210.

In some implementations, the protective layer 200 includes but is not limited to at least one of protective layers such as a micro-arc oxide ceramic layer, a leather film, an anode layer, an electrophoresis film layer, and a paint coating. A thickness of the micro-arc oxide ceramic layer is 0.002 mm to 0.012 mm, a thickness of the leather film is 0.0005 mm to 0.003 mm, a thickness of the anode layer is 0.005 mm to 0.01 mm, a thickness of the electrophoresis film layer is 0.005 mm to 0.01 mm, and a thickness of the paint coating is 0.005 mm to 0.01 mm.

In some implementations, the connection through hole 210 on the protective layer 200 may be pre-opened. For example, a forming process of the connection through hole 210 may be breaking the protective layer 200, or the connection through hole 210 is reserved in advance when the protective layer 200 is formed. A breaking process of the connection through hole 210 may be a process like etching or laser engraving.

In some implementations, in the foregoing magnesium alloy connection mechanical part 10a, there is at least one magnesium-copper solid solution layer 400a, at least a part of the at least one magnesium-copper solid solution layer 400a at a height is embedded into the magnesium alloy body 100, and the at least one magnesium-copper solid solution layer 400a jointly forms a common conducting layer 300a covering the connection through hole 210. The adhesive layer 500a is affixed between the protective layer 200 and a position that is on the conducting layer 300a and that corresponds to the protective layer 200, to seal the connection through hole 210.

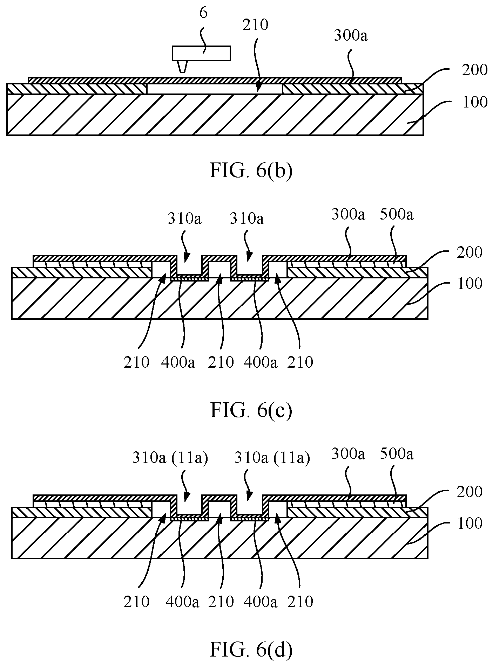

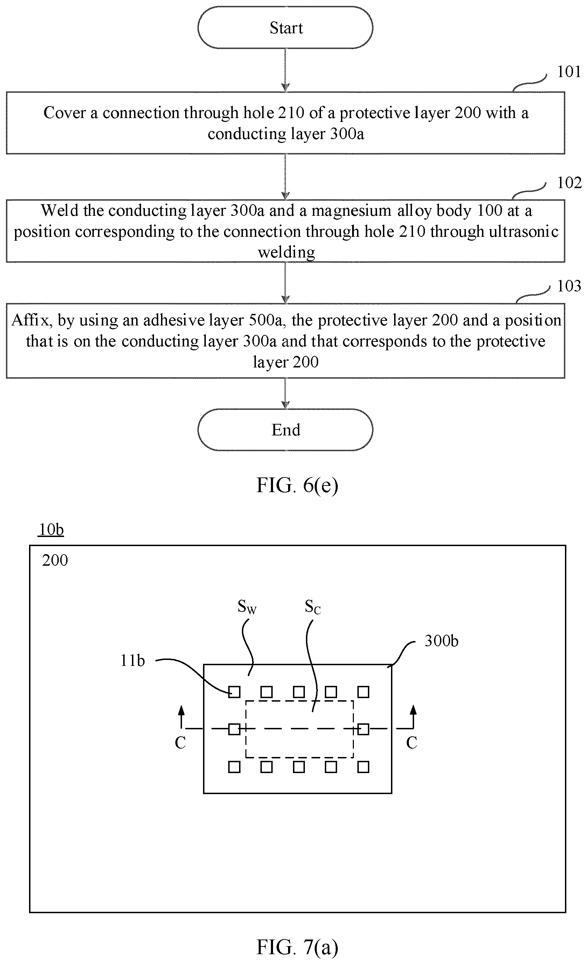

In some implementations, in the foregoing magnesium alloy connection mechanical part 10, a concave portion 310a (as shown in FIG. 6(c) in the following figure) is formed at a position (namely, a welding point) that is on the conducting layer 300a and that corresponds to the magnesium-copper solid solution layer 400a. To prevent a crack in the concave portion 310a from spreading to affect a service life of the magnesium alloy connection mechanical part 10a, the concave portion 310a is filled with a filling material 600. For example, the concave portion 310a may be sealed by using selective glue dispensing or resin. It may be understood that the concave portion 310a is also a welding point 11a formed through ultrasonic welding.

In some implementations, as shown in FIG. 5(b), to improve aesthetics of a surface of the magnesium alloy connection mechanical part 10, an outer surface of the filling material 600 is flush with an outer surface of the conducting layer 300a.

In some implementations, a material of the magnesium alloy body 100 in the magnesium alloy connection mechanical part 10a is any one of a magnesium-zinc alloy, a magnesium-manganese alloy, a magnesium-rhenium alloy, and a magnesium-lithium alloy.

After a specific structure of the magnesium alloy connection mechanical part 10a is described, the following continues to describe structural composition of the magnesium alloy connection mechanical part 10a before forming and a forming process of the magnesium alloy connection mechanical part 10a. As shown in FIG. 6(a), a structure of the magnesium alloy connection mechanical part 10a before forming includes a conducting layer 300a and a magnesium alloy body 100, and a protective layer 200 is wrapped around the magnesium alloy body 100.

This application further provides a mechanical part forming method, used to form any one of the foregoing magnesium alloy connection mechanical parts 10a. A transition layer 400a is formed, through ultrasonic welding, in a region in which the magnesium alloy body 100 is connected to the conducting layer 300, by using a part of the conducting layer 300 and a part of the magnesium alloy body 100 at a height. A welding point of the ultrasonic welding is located in a region corresponding to a connection through hole 210. Specifically, the mechanical part forming method includes the following steps.

Block S101: Cover the connection through hole 210 of the protective layer 200 with the conducting layer 300a. An area of the conducting layer 300a is greater than a size of the connection through hole 210, and the connection through hole 210 is located in a projection region of the conducting layer 300a on a plane in which the protective layer 200 is located. It may be understood that, when the conducting layer 300a covers the connection through hole 210 of the protective layer 200, the conducting layer 300a may be further pre-fixed to the protective layer 200, or the conducting layer 300a may be pre-fixed to the magnesium alloy body 100, so as to avoid a mismatch of the conducting layer 300a relative to the connection through hole 210 caused by movement of the conducting layer 300a relative to the connection through hole 210 during subsequent ultrasonic welding.

Block S102: Weld the conducting layer 300a and the magnesium alloy body 100 at a position corresponding to the connection through hole 210 through ultrasonic welding.

In some implementations, before ultrasonic welding, a region in which the conducting layer 300a is connected to the magnesium alloy body 100 in the through hole 210 is cleaned and polished, and the conducting layer 300a is pre-fixed on a surface of the magnesium alloy body 100. Specifically, mechanical polishing and ultrasonic cleaning are performed on a to-be-welded interface of the conducting layer 300a and a to-be-welded interface of the magnesium alloy body 100b, to keep the conducting layer 300a and the magnesium alloy body 100 closely attached after being stacked. When a surface of the conducting layer 300a facing the magnesium alloy body 100 has high fineness, and a surface of the magnesium alloy body 100 facing the conducting layer 300a also has high fineness, the conducting layer 300a and the magnesium alloy body 100 may be pre-fixed by stacking the conducting layer 300a and the magnesium alloy body 100. For ease of description, in this specification, in addition to a distribution region of the protective layer on the magnesium alloy body 100, other surfaces of the magnesium alloy body 100 may be considered as surfaces of the magnesium alloy body 100 exposed in the connection through hole 210.

As shown in FIG. 6(b), an ultrasonic welding probe 6 is in contact with the conducting layer 300a, and then an ultrasonic tool head of the ultrasonic welding probe 6 is adjusted to apply ultrasonic welding to the conducting layer 300a, so that a contact part of the conducting layer 300a and the magnesium alloy body 10 is alloyed to form a welding point 11a, as shown in FIG. 6(c).

In some implementations, the ultrasonic tool head applies welding ultrasonic to the conducting layer 300a and the magnesium alloy body 100. Power of the welding ultrasonic is controlled within 200 W to 500 W, and a frequency of the welding ultrasonic is controlled within 10 kHz to 30 kHz. A ternary eutectic reaction occurs between the magnesium alloy body 100 and the conducting layer 300a, and a connected region is converted into a liquid phase of a Mg-Cu-Zn eutectic structure, the Mg-Cu-Zn eutectic structure forms a Mg-Cu-Zn eutectic structure layer, a Mg (Cu, Zn) solid solution is formed in the magnesium alloy body 100, and the Mg (Cu, Zn) solid solution forms a Mg (Cu, Zn) solid solution layer. The ultrasonic tool head continues to apply welding ultrasonic to the conducting layer 300a and the magnesium alloy body 100. The Mg-Cu-Zn eutectic structure reaction decreases, and the Mg (Cu, Zn) solid solution increases until the Mg-Cu-Zn eutectic structure disappears, and the Mg-Cu-Zn eutectic structure is completely converted into the Mg (Cu, Zn) solid solution.

Block S103: Affix, by using the adhesive layer 500a, the protective layer 200 and the position that is on the conducting layer 300a and that corresponds to the protective layer 200.

Still refer to FIG. 6(c). The protective layer 200 and the position that is on the conducting layer 300a and that corresponds to the protective layer 200 are affixed by using the adhesive layer 500a, to complete sealing of the connection through hole 210, that is, the conducting layer 300a around the connection through hole 210 is affixed on the protective layer 200 by using the adhesive layer 500a, to isolate the magnesium alloy body 100 from the outside.

In some implementations, because a thickness of the conducting layer 300a is thin, a region corresponding to a welding point 11a in the formed magnesium alloy connection mechanical part 10a forms a large-size concave portion 310a. A crack may be formed at a bending position in a process of generating the concave portion 310a. To prevent the conducting layer 300a from being damaged due to stress concentration at the crack, after the step of sealing the connection through hole 210 is completed, the foregoing mechanical part forming method further includes a step of processing a region in which the welding point 11a is located. For example:
Block S104: Fill the concave portion 310 by using the filling material 600.

The filling material 600 may be glue dispensing or resin. To improve aesthetics of an overall structure, as shown in FIG. 5(c) and FIG. 6(d), an outer surface of the filling material 600 is flush with an outer surface of the conducting layer 300a. It may be understood that the outer surface of the filling material 600 is a surface that is of the filling material 600 and that is opposite to the magnesium alloy body 100, and the outer surface of the conducting layer 300a is a surface that is of the conducting layer 300a and that is opposite to the magnesium alloy body 100.

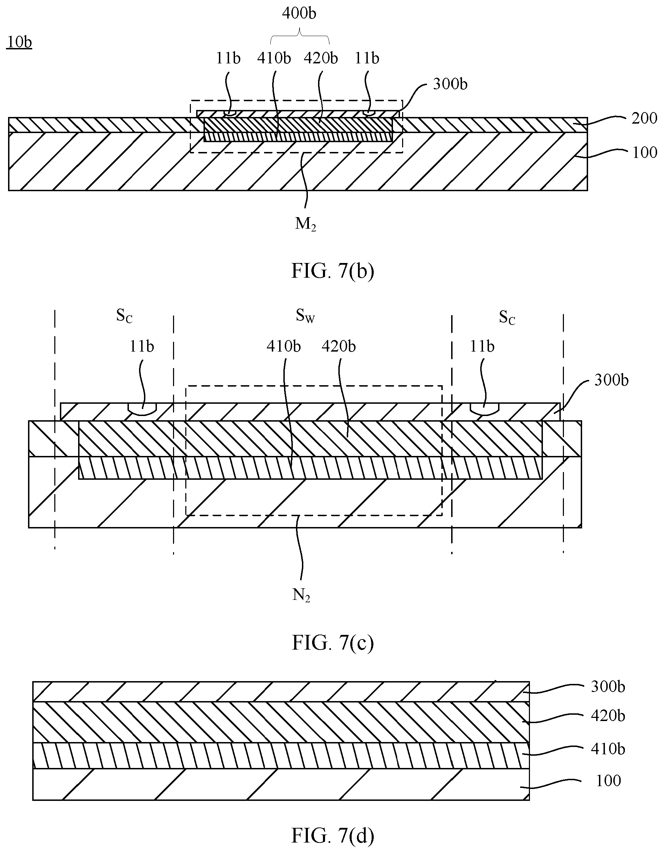

FIG. 7(a) is a top view of a magnesium alloy connection mechanical part 10b. FIG. 7(b) is a sectional view of a magnesium alloy connection mechanical part 10b in FIG. 7(a) along a section C-C in FIG. 7(a). FIG. 7(d) is a partial enlarged diagram of a magnesium alloy connection mechanical part 10b in an N₂ region in FIG. 7(c) according to this application.

In another application scenario, a difference from the magnesium alloy connection mechanical part 10a in the previous application scenario lies in that, referring to FIG. 7(a), the conducting layer 300b in the magnesium alloy connection mechanical part 10b is a copper plate or a copper sheet, a welding region S_{W} is formed in a surrounding region of the conducting layer 300b, and the welding region S_{W} includes several welding points 11b distributed around a boundary of the conducting layer 300b. A region other than the welding region S_{W} on the conducting layer 300b is a working region S_{c}. In some implementations, based on an ultrasonic welding technology of a magnesium-copper hetero-alloy, an intermediate alloy is disposed in the magnesium-copper hetero-alloy, the intermediate alloy can form a solid solution alloy with the magnesium-copper hetero-alloy separately. After ultrasonic welding under a specific temperature condition, a solid solution alloy welding layer is formed, and the welding layer and a copper alloy form an electrical connection medium and an anti-corrosion medium. By adjusting a region of ultrasonic welding joints are connected, distribution of welding points, and a vibration frequency during welding, based on a direction of integration between an ultrasonic welding region and an electrical connection working region, the anti-corrosion electrical connection solution of magnesium alloy components with ultra-small area is realized.

In some implementations, a material of the conducting layer 300b may be at least one of copper metal and a zinc-copper alloy.

As shown in FIG. 7(a), the welding region S_{W} is disposed around the working region S_{c}. The welding region S_{W} includes 12 welding points 11b. It may be understood that a position of the working region S_{c} and a size of the welding point may be adjusted by adjusting a quantity and distribution positions of the welding points 11b and a process parameter of ultrasonic welding.

As shown in FIG. 7(b), in the magnesium alloy connection mechanical part 10b, a connection through hole 210 is located in a projection of the conducting layer 300b in a plane on which the protective layer 200 is located, at least a part of a transition layer 400b at a height is embedded into the magnesium alloy body 100, and the connection through hole 210 is filled with a remaining part of the transition layer 400b in a radial direction of the connection through hole 210, to seal the connection through hole 210. It may be understood that, whether the connection through hole 210 is fully filled in an axial direction of the connection through hole 210 with the remaining part of the transition layer 400b is not specifically limited in this application, provided that the connection through hole 210 can be fully filled in the radial direction of the connection through hole 210, the conducting layer 300b is stably connected to the magnesium alloy body 100, and a related solution for implementing a stable electrical connection between the conducting layer 300b and the magnesium alloy body 100 falls within the protection scope of this application. This is not specifically limited in this application. An interface shape of the connection through hole 210 in a cross section parallel to a surface of the magnesium alloy body 10 may be any shape like a circle, a square, or a hexagon. The radial direction of the connection through hole 210 is a direction parallel to the surface of the magnesium alloy body 100 in the connection through hole 210. Similarly, the axial direction of the connection through hole 210 is a direction that is in the connection through hole 210 and that is perpendicular to the surface of the magnesium alloy body 100.

It may be understood that, in this application scenario, the connection through hole 210 needs to be filled with the transition layer 400b in the radial direction of the connection through hole 210, that is, a thickness of the transition layer 400b is thicker than a thickness of the transition layer 400a in a previous application scenario, and a volume of the transition layer 400b is larger than a volume of the transition layer 400a in a previous application scenario. Based on this, in some implementations, in addition to the conducting layer 300b and the magnesium alloy body 100, the transition layer 400b further needs to be formed by using an intermediate layer 700.

In some implementations, a thickness of the intermediate layer 700 needs to meet an ultrasonic welding requirement, and a thickness range of the intermediate layer 700 is 0.5 µm to 15 µm. For example, the thickness range of the intermediate layer 700 is 1 µm to 10 µm.

In some implementations, the intermediate layer 700 may be screened by using the following conditions: First, a melting temperature of the intermediate layer 700 is lower than a melting point of the conducting layer 300 and a melting point 195°C to 205°C of the magnesium alloy body 100, or a eutectic temperature of main elements between the intermediate layer 700, the magnesium alloy body 100 and the conducting layer 300 is lower than the melting point of the magnesium alloy body 100 and a melting point 150°C to 300°C of the conducting layer 300. Second, a biggest value of solid solubility between a main element of the intermediate layer 700 and a main element of the magnesium alloy body 100 and a main element of the conducting layer 300 reaches at least 0.1%. Third, a biggest difference between the main element of the intermediate layer 700 and atomic radiuses of the magnesium alloy body 100 and the conducting layer 300 does not exceed 50 pm; and a maximum electrode potential difference between the main element of the intermediate layer 700 and the melting point of the magnesium alloy body 100 and the conducting layer 300 does not exceed -0.8 V. It may be understood that the intermediate layer 700 needs to meet at least three of the foregoing conditions.

In addition, the thickness of the conducting layer 300b needs to meet a ground requirement, surface processing and overall conductivity of the conducting layer 300b need to meet a ground requirement of conductive foam, a conductive spring, or even a ground spring plate, and the thickness of the conducting layer 300b further needs to meet a process requirement of ultrasonic welding.

In some implementations, the thickness range of the conducting layer 300b is 5 µm to 300 µm. For example, the thickness range of the conducting layer 300b is 10 µm to 200 µm.

In some implementations, to implement good welding between the conducting layer 300b and the magnesium alloy body 100 and avoid strong galvanic corrosion caused after the welding, an alloy material with a low melting point, capable of performing solution treatment with a magnesium alloy and a copper alloy separately, and solid solubility greater than 0.1% is selected as the intermediate layer 700 between the conducting layer 300b and the magnesium alloy body 100. For example, the intermediate layer 700 is a zinc-aluminum-tin alloy. It may be understood that tin is used to reduce the melting point of the intermediate layer 700, aluminum is used to improve solid solubility with the magnesium alloy body 100, and zinc is used to improve solid solubility with the conducting layer 300b (copper alloy).

In some implementations, the transition layer 400b includes a first transition sub-layer 410b and a second transition sub-layer 420b. The first transition sub-layer 410b is formed in a region in which the magnesium alloy body 100 and the intermediate layer 700 are connected, and is jointly formed by a part of the intermediate layer 700 and a part of the magnesium alloy body 100 at a height, and at least a part of the first transition sub-layer 410b at a height is embedded into the magnesium alloy body 100. The second transition sub-layer 420b is formed on the first transition sub-layer 410b, and the second transition sub-layer 420b is formed in a region in which the conducting layer 300 is connected to the intermediate layer 700, and is jointly formed by a part of the intermediate layer 700 and a part of the conducting layer 300 at a height. The connection through hole 210 is filled with a remaining part of the transition layer 400 in a radial direction of the connection through hole 210, that is, the connection through hole 210 is filled with the first transition sub-layer 410b and/or the second transition sub-layer 420b in the radial direction of the connection through hole 210, to seal the connection through hole 210. As shown in FIG. 7(c), the connection through hole 210 is filled with at least one of the first transition sub-layer 410b and the second transition sub-layer 420b in the radial direction of the connection through hole 210, that is, the connection through hole 210 is sealed. At least a part of the connection through hole 210 is filled with the first transition sub-layer 410b and the second transition sub-layer 420b in an axial direction of the connection through hole 210, that is, an electrical connection between the conducting layer 300b and the magnesium alloy body 100 is implemented.

FIG. 7(d) is a partial enlarged diagram of a magnesium alloy connection mechanical part 10b in an N₂ region in FIG. 7(b). In some implementations, as shown in FIG. 7(d), the conducting layer 300b, the first transition sub-layer 410b, the second transition sub-layer 420b, and the magnesium alloy body 100 are sequentially disposed in parallel. The first transition sublayer 410b and the second transition sub-layer 420b are configured to implement an electrical connection between the conducting layer 300b and the magnesium alloy body 100 when the conducting layer 300b is separated from the magnesium alloy body 100. It may be understood that a thickness of the conducting layer 300b, a thickness of the first transition sub-layer 410b, a thickness of the second transition sub-layer 420b, and arrangement positions of the first transition sub-layer 410b and the second transition sub-layer 420b are not specifically limited in this application. Any arrangement solution that can implement stable connection and separation between the conducting layer 300b and the magnesium alloy body 100 falls within the protection scope of this application.

After a specific structure of the magnesium alloy connection mechanical part 10b is described, the following continues to describe structural composition of the magnesium alloy connection mechanical part 10a before forming and a forming process of the magnesium alloy connection mechanical part 10b.

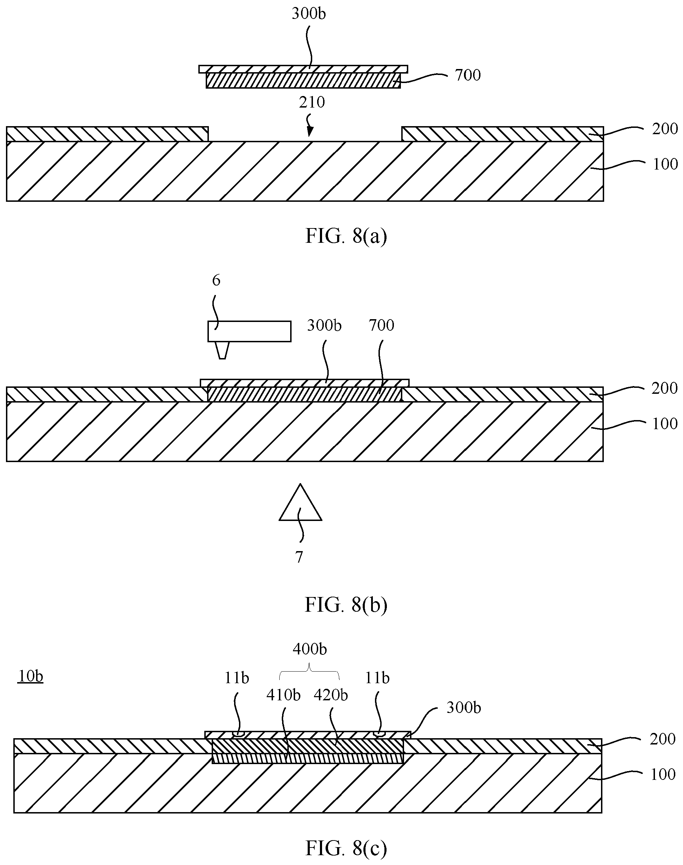

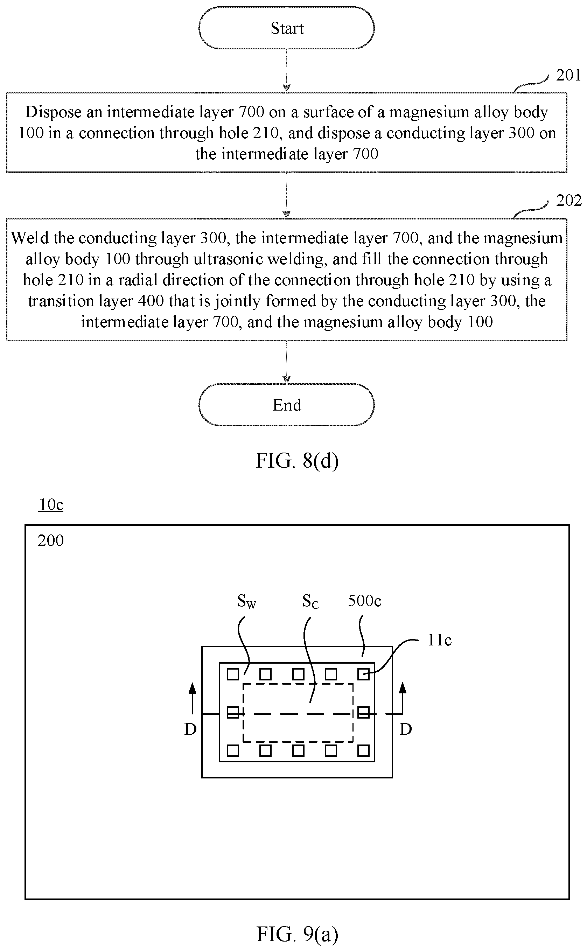

As shown in FIG. 8(a), a structure of the magnesium alloy connection mechanical part 10b before forming includes a magnesium alloy body 100, an intermediate layer 700, and a conducting layer 300b, and a protective layer 200 is wrapped around the magnesium alloy body 100.

This application further provides a mechanical part forming method, used to form any one of the foregoing magnesium alloy connection mechanical parts 10b.

Block S201: Dispose an intermediate layer 700 on a surface of the magnesium alloy body 100 in a connection through hole 210, and dispose a conducting layer 300 on the intermediate layer 700.

In some implementations, the intermediate layer 700 and the conducting layer 300b may be installed in a manner of cleaning and polishing surfaces of the conducting layer 300b, the intermediate layer 700, and the magnesium alloy body 100. Specifically, mechanical polishing and ultrasonic cleaning are performed on a to-be-welded interface of the conducting layer 300b, a to-be-welded interface of the intermediate layer 700, and a to-be-welded interface of the magnesium alloy body 100b, to ensure that the conducting layer 300b, the intermediate layer 700, and the magnesium alloy body 100 are closely attached after being sequentially stacked.

In some implementations, the conducting layer 300b and the intermediate layer 700 are pre-fixed, and then the pre-fixed conducting layer 300b and the intermediate layer 700 are preset on a surface of the magnesium alloy body 100. A thickness of the intermediate layer 700 is slightly greater than a thickness of the protective layer 200. The conducting layer 300b, the intermediate layer 700, and the magnesium alloy body 100 that are cleaned and polished are sequentially stacked in a sequence of the conducting layer 300b, the intermediate layer 700, and the magnesium alloy body 100, and it is ensured that a region in which the stacked conducting layer 300b, the intermediate layer 700, and the magnesium alloy body 100 are connected is a to-be-welded interface that is cleaned and polished in a previous sequence.

When a surface of the conducting layer 300b facing the intermediate layer 700 has high fineness, and a surface of the intermediate layer 700 facing the conducting layer 300b also has high fineness, the conducting layer 300b and the intermediate layer 700 may be pre-fixed by stacking the conducting layer 300b and the intermediate layer 700. The conducting layer 300b and the intermediate layer 700 are pre-fixed by using an intermolecular adsorption affinity.

Block S202: Weld the conducting layer 300, the intermediate layer 700, and the magnesium alloy body 100 through ultrasonic welding, and fill the connection through hole 210 in a radial direction of the connection through hole 210 by using a transition layer 400 that is jointly formed by the conducting layer 300, the intermediate layer 700, and the magnesium alloy body 100.

In some implementations, as shown in FIG. 8(b), local induction heating is performed right below the surface of the magnesium alloy body 100, so that a temperature of a local welding region reaches above a melting point of the intermediate layer 700. For example, the temperature of the local welding region is adjusted to 10°C higher than the melting point of the intermediate layer 700. An ultrasonic welding probe 6 is in contact with the conducting layer 300b. Then, an ultrasonic tool head of the ultrasonic welding probe 6 is adjusted to continue to apply ultrasonic welding to a to-be-conducted layer 300b, and the intermediate layer 700 is heated by using a heating apparatus 7. For example, the ultrasonic tool head is pressed tightly on an upper part of the conducting layer 300b and applies pressure to the conducting layer 300b, where a pressure value is 0.1 MPa to 0.2 MPa. As shown in FIG. 8(c), a physical status of the to-be-conducted layer 300b changes, and the to-be-conducted layer 300b and the magnesium alloy body 100 separately perform alloy reaction with the intermediate layer 700 to form a transition layer 400b, and the transition layer 400b is adjusted to enable the transition layer 400 to fill the connection through hole 210 in a radial direction of the connection through hole 210.

In some implementations, a material of the intermediate layer 700 is a Sn-Zn-Al alloy. A Cu (Sn, Zn, Al) solid solution is formed at a welding surface of the intermediate layer 700 and a copper plate 300, and a Mg (Sn, Zn, Al) solid solution is formed at a welding surface of the intermediate layer 700 and the magnesium alloy body 100. An intermediate alloy layer between the two welding surfaces completely covers welding regions of the magnesium alloy to form an anti-corrosion medium and a conductive medium.

In some implementations, power of welding ultrasonic is controlled to be 200 W to 500 W, and a frequency of the welding ultrasonic is controlled to be 10 kHz to 30 kHz. In addition, the heating apparatus 7 heats the intermediate layer 700, power of the heating apparatus 7 is controlled to be 4 kW to 6 kW, a frequency of the heating apparatus 7 is controlled to be 200 kHz to 250 kHz, and a reaction temperature of the intermediate layer 700 is controlled to be 460°C. Under an effect of the welding ultrasonic, physical statuses of the magnesium alloy body 100 and the conducting layer 300b are solid states, a physical status of the intermediate layer 700 is a liquid state, and a solid-liquid interface is formed to implement preliminary metallurgical bonding.

The ultrasonic tool head continues to apply welding ultrasonic to the conducting layer 300b, the intermediate layer 700, and the magnesium alloy body 100. In addition, the heating apparatus 7 heats the intermediate layer 700, and maintains the reaction temperature of the intermediate layer 700 at 455°C to 465°C. The physical status of the magnesium alloy body 100 is the solid state. The magnesium alloy body 100 and the intermediate layer 700 undergo a multieutectic reaction. The intermediate layer 700 is converted into a liquid phase of a Mg-Cu-Zn-Al-Sn eutectic structure. The Mg-Cu-Zn-Al-Sn eutectic structure forms a Mg-Cu-Zn-Al-Sn eutectic structure layer. A Mg (Al, Cu, Zn) solid solution is formed in the magnesium alloy body 100, the Mg (Al, Cu, Zn) solid solution forms a Mg (Al, Cu, Zn) solid solution layer, a Cu (Zn, Al, Sn) solid solution is formed in the conducting layer 300b, and the Cu (Zn, Al, Sn) solid solution forms a Cu (Zn, Al, Sn) solid solution layer.

The ultrasonic tool head continues to apply welding ultrasonic to the conducting layer 300b, the intermediate layer 700, and the magnesium alloy body 100. The reaction temperature of the intermediate layer 700 continues to maintain at 455°C to 465°C, a Mg-Cu-Zn-Al-Sn eutectic structure reaction in the intermediate layer 700 decreases, and the Cu (Zn, Al, Sn) solid solution and the Mg (Al, Cu, Zn) solid solution increase until the Mg-Cu-Zn-Al-Sn eutectic structure disappears, the Mg-Cu-Zn-Al-Sn eutectic structure is completely converted into the Cu (Zn, Al, Sn) solid solution and the Mg (Al, Cu, Zn) solid solution. It may be understood that the physical status of the Cu (Zn, Al, Sn) solid solution and the Mg (Al, Cu, Zn) solid solution is solid, to form a solid solution joint.

In the foregoing method for forming the magnesium alloy connection mechanical part 10b and the magnesium alloy connection mechanical part 10b, an intermediate alloy is disposed in a magnesium-copper hetero-alloy, the intermediate alloy can form a solid solution alloy with the magnesium-copper hetero-alloy separately. After ultrasonic welding under a specific temperature condition, a solid solution alloy welding layer is formed, and the welding layer and a copper alloy form an electrical connection medium and an anti-corrosion medium. By adjusting a region of ultrasonic welding joints are connected, distribution of welding points, and a vibration frequency during welding, based on a direction of integration between an ultrasonic welding region and an electrical connection working region, the anti-corrosion electrical connection of magnesium alloy components with ultra-small area is realized.

In another application scenario, a difference from the magnesium alloy connection mechanical part 10b in the previous application scenario lies in that, referring to FIG. 9(a), a size of a conducting layer 300c is less than a hole diameter of a connection through hole 210, and the connection through hole 210 cannot be filled with a transition layer 400c in a radial direction of the connection through hole 210. In some implementations, based on an ultrasonic welding technology of a magnesium-copper hetero-alloy, the magnesium-copper hetero-alloy forms an electrical connection medium through ultrasonic welding, and galvanic corrosion is alleviated in a welding region that cannot be covered by the conducting layer 300c and the protective layer 200 by using glue dispensing sealing, to further reduce a welding area of the conducting layer 300c, and implement an anti-corrosion electrical connection of a magnesium alloy component with an ultra-small area.

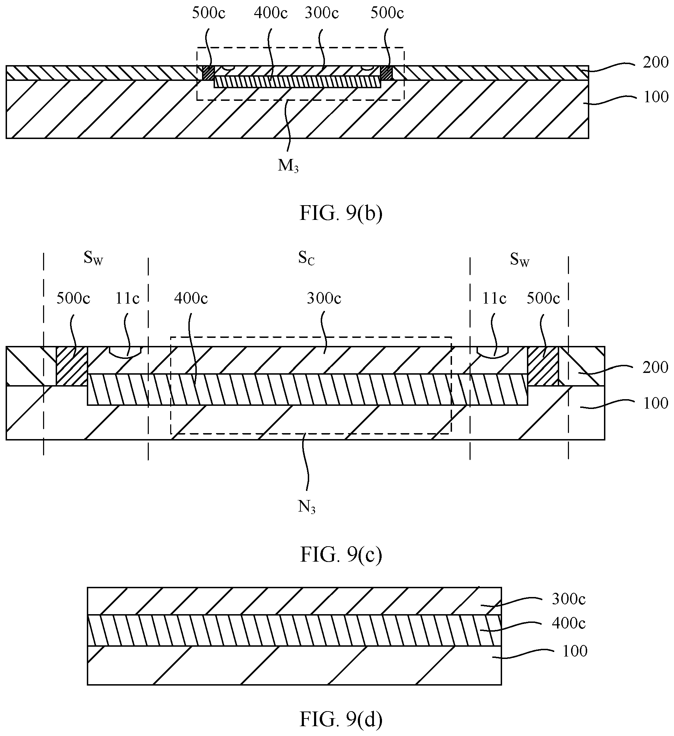

Specifically, as shown in FIG. 9(b), at least a part of the transition layer 400c at a height is embedded into the magnesium alloy body 100, and a remaining part of the transition layer 400c is located in the connection through hole 210. The conducting layer 300c is located in the connection through hole 210. A spacing is formed between an inner side surface of the connection through hole 210 and both a side surface of the transition layer 400c and a side surface of the conducting layer 300c, and the spacing is filled with a sealing material 500c in a radial direction of the connection through hole 210, to seal the connection through hole 210.

FIG. 9(d) is a partial enlarged diagram of a magnesium alloy connection mechanical part 10c in an N₃ region in FIG. 9(c). In some implementations, as shown in FIG. 9(d), the conducting layer 300c, the transition layer 400c, and the magnesium alloy body 100 are sequentially disposed in parallel. The transition layer 400c is configured to implement an electrical connection between the conducting layer 300c and the magnesium alloy body 100 when the conducting layer 300c is separated from the magnesium alloy body 100. It may be understood that a thickness of the conducting layer 300c, a thickness of the transition layer 400c, and a position of the transition layer 400c are not specifically limited in this application. Any disposition solution that can implement stable connection and separation between the conducting layer 300c and the magnesium alloy body 100 falls within the protection scope of this application.

In the foregoing magnesium alloy connection mechanical part 10c, the intermediate layer 700 is removed between the conducting layer 300c and the magnesium alloy body 100. This reduces welding difficulty and improves welding efficiency. An area of the conducting layer 300c is further reduced. It can be learned from the figure that the area of the conducting layer 300c is smaller than a surface area of the magnesium alloy body 100, and the conducting layer 300c and the protective layer 200 are sealed by using glue dispensing. When transparent glue dispensing is used for sealing, a corrosion status of the magnesium alloy body 100 may be clearly observed subsequently, to provide a basis for subsequent process adjustment.

After a specific structure of the magnesium alloy connection mechanical part 10c is described, the following continues to describe structural composition of the magnesium alloy connection mechanical part 10c before forming and a forming process of the magnesium alloy connection mechanical part 10c.

Block 301: Dispose the conducting layer 300c on a surface of the magnesium alloy body 100 in a connection through hole 210.

Block 302: Weld the conducting layer 300c and the magnesium alloy body 100 through ultrasonic welding.

Block 303: Fill a spacing 800 between a side surface of the protective layer 200 and both a side surface of the conducting layer 300c and a side surface of the transition layer 400c by using a sealing material 500c.

In some implementations, in the magnesium alloy connection mechanical part 10c, an outer surface of the protective layer 200, an outer surface of the sealing material 500c, and an outer surface of the conducting layer 300c are flush with each other. That the planes are flush may be understood as that two or more planes are basically in a same plane to some extent.

In addition, this application further provides an electronic device, including at least one of the foregoing magnesium alloy connection mechanical parts.

In the drawings, some structural or method features may be shown in a particular arrangement and/or sequence. However, it should be understood that such a specific arrangement and/or sequence may not be required. Rather, in some embodiments, the features may be arranged in a manner and/or order other than shown in the illustrative drawings. In addition, the inclusion of structural or method features in a particular figure is not meant to imply that such features are required in all embodiments, and in some embodiments, these features may not be included or may be combined with other features.

It should be noted that: In the examples and specification of this patent, relational terms such as first and second are merely used to distinguish one entity or operation from another, and do not necessarily require or imply any such actual relationship or order between these entities or operations. Moreover, the terms "include" or any other variant thereof is intended to cover a nonexclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the existence of additional identical elements in the process, method, article, or device that includes the element.

Although this application has been illustrated and described with reference to some preferred embodiments of this application, it should be understood by a person of ordinary skill in the art that various changes may be made thereto in form and detail without departing from the scope of this application.

## Claims

1. A magnesium alloy connection mechanical part (10), comprising:
a magnesium alloy body (100);
a protective layer (200), wherein the protective layer (200) wraps the magnesium alloy body (100), a connection through hole (210) connected to a surface of the magnesium alloy body (100) and provided through the protective layer (200), and a transition layer (400) formed at a bottom of the connection through hole (210);
a conducting layer (300) formed on the transition layer (400), and the transition layer (400) and the conducting layer (300) are used for an electrical connection between the magnesium alloy body (100) and the outside; wherein the connection through hole (210) is sealed by using the transition layer (400) or the conducting layer (300) and a sealing material (500), to isolate the magnesium alloy body (100) from the outside.

2. The magnesium alloy connection mechanical part (10) according to claim 1, wherein the transition layer (400) is formed, through ultrasonic welding, by a part of the conducting layer (300) and a part of the magnesium alloy body (100) at a height in a region in which the magnesium alloy body (100) is connected to the conducting layer (300).

3. The magnesium alloy connection mechanical part (10) according to claim 2, wherein a welding point of the ultrasonic welding is located in a region corresponding to the connection through hole (210).

4. The magnesium alloy connection mechanical part (10) according to any one of claims 1 to 3, wherein there is at least one transition layer (400), at least a part of the at least one transition layer (400) at a height is embedded into the magnesium alloy body (100), and a common conducting layer (300) covering the connection through hole (210) is formed on the at least one transition layer (400); and
the sealing material (500) is an adhesive layer, and the adhesive layer is affixed between the protective layer (200) and a position that is on the conducting layer (300) and that corresponds to the protective layer (200), to seal the connection through hole (210).

5. The magnesium alloy connection mechanical part (10) according to claim 4, wherein a concave portion is formed at a position that is on the conducting layer (300) and that corresponds to the transition layer (400), and the concave portion is filled with a filling material (600).

6. The magnesium alloy connection mechanical part (10) according to claim 5, wherein an outer surface of the filling material (600) is flush with an outer surface of the conducting layer (300).

7. The magnesium alloy connection mechanical part (10) according to any one of claims 1 to 3, wherein
at least a part of the transition layer (400) at a height is embedded into the magnesium alloy body (100), and a remaining part of the transition layer (400) is located in the connection through hole (210);
the conducting layer (300) is located in the connection through hole (210); and
a spacing is formed between an inner side surface of the connection through hole (210) and both a side surface of the transition layer (400) and a side surface of the conducting layer (300), and the spacing is filled with the sealing material (500) in a radial direction of the connection through hole (210), to seal the connection through hole (210).

8. The magnesium alloy connection mechanical part (10) according to claim 7, wherein an outer surface of the protective layer (200), an outer surface of the sealing material (500), and an outer surface of the conducting layer (300) are flush with each other.

9. The magnesium alloy connection mechanical part (10) according to any one of claims 1 to 3, wherein
at least a part of the transition layer (400) at a height is embedded into the magnesium alloy body (100), and the connection through hole (210) is filled with a remaining part of the transition layer (400) **in** a radial direction of the connection through hole (210), to seal the connection through hole (210).

10. The magnesium alloy connection mechanical part (10) according to claim 9, wherein the transition layer (400) comprises:
a first transition sub-layer (410), wherein the first transition sub-layer (410) is formed in a region in which the magnesium alloy body (100) is connected to an intermediate layer (700), and is formed by a part of the intermediate layer (700) and a part of the magnesium alloy body (100) at a height, and at least a part of the first transition sub-layer (410) at a height is embedded into the magnesium alloy body (100);
a second transition sub-layer (420) formed on the first transition sub-layer (410), wherein the second transition sub-layer (420) is formed in a region in which the conducting layer (300) is connected to the intermediate layer (700), and is formed by a part of the intermediate layer (700) and a part of the conducting layer (300) at a height; and
when the connection through hole (210) is filled with the remaining part of the transition layer (400) in the radial direction of the connection through hole (210), the connection through hole (210) is filled with the first transition sub-layer (410) and/or the second transition sub-layer (420) in the radial direction of the connection through hole (210), to seal the connection through hole (210).

11. The magnesium alloy connection mechanical part (10) according to claim 1, wherein the transition layer (400) is an electrically conductive adhesive layer.

12. The magnesium alloy connection mechanical part (10) according to claim 1, wherein a material of the magnesium alloy body (100) is any one of a magnesium-zinc alloy, a magnesium-manganese alloy, a magnesium-rhenium alloy, and a magnesium-lithium alloy.

13. The magnesium alloy connection mechanical part (10) according to claim 1, wherein the protective layer (200) comprises any one of a micro-arc oxide ceramic layer, a leather film, and an anode layer.

14. An electronic device, comprising at least one magnesium alloy connection mechanical part (10) according to any one of claims 1 to 11.

15. A component forming method, configured to form the magnesium alloy connection mechanical part (10) according to any one of claims 1 to 6, wherein the method comprises:
covering a connection through hole (210) of a protective layer (200) with a conducting layer (300);
welding the conducting layer (300) and a magnesium alloy body (100) at a position corresponding to the connection through hole (210) through ultrasonic welding; and
affixing, by using a sealing material (500), the protective layer (200) and a position that is on the conducting layer (300) and that corresponds to the protective layer (200).

## Patentansprüche

1. Mechanisches Verbindungsteil aus Magnesiumlegierung (10), umfassend:
einen Magnesiumlegierungskörper (100);
eine Schutzschicht (200), wobei die Schutzschicht (200) den Magnesiumlegierungskörper (100) umhüllt, ein Verbindungsdurchgangsloch (210), das mit einer Oberfläche des Magnesiumlegierungskörpers (100) verbunden ist und durch die Schutzschicht (200) bereitgestellt ist, und eine Übergangsschicht (400), die an einem Boden des Verbindungsdurchgangslochs (210) ausgebildet ist;
eine leitfähige Schicht (300), die auf der Übergangsschicht (400) ausgebildet ist, und wobei die Übergangsschicht (400) und die leitfähige Schicht (300) für eine elektrische Verbindung zwischen dem Magnesiumlegierungskörper (100) und der Außenseite verwendet werden; wobei
das Verbindungsdurchgangsloch (210) mithilfe der Übergangsschicht (400) oder der leitfähigen Schicht (300) und eines Dichtungsmaterials (500) abgedichtet ist, um den Magnesiumlegierungskörper (100) von der Außenseite zu isolieren.

2. Mechanisches Verbindungsteil aus Magnesiumlegierung (10) nach Anspruch 1, wobei die Übergangsschicht (400) durch Ultraschallschweißen aus einem Teil der leitfähigen Schicht (300) und einem Teil des Magnesiumlegierungskörpers (100) in einer Höhe in einem Bereich ausgebildet ist, in dem der Magnesiumlegierungskörper (100) mit der leitfähigen Schicht (300) verbunden ist.

3. Mechanisches Verbindungsteil aus Magnesiumlegierung (10) nach Anspruch 2, wobei sich ein Schweißpunkt des Ultraschallschweißens in einem Bereich befindet, der dem Verbindungsdurchgangsloch (210) entspricht.

4. Mechanisches Verbindungsteil aus Magnesiumlegierung (10) nach einem der Ansprüche 1 bis 3, wobei es mindestens eine Übergangsschicht (400) gibt, mindestens ein Teil der mindestens einen Übergangsschicht (400) in einer Höhe in den Magnesiumlegierungskörper (100) eingebettet ist und eine gemeinsame leitfähige Schicht (300), die das Verbindungsdurchgangsloch (210) abdeckt, auf der mindestens einen Übergangsschicht (400) ausgebildet ist; und
das Dichtungsmaterial (500) eine Klebeschicht ist und die Klebeschicht zwischen der Schutzschicht (200) und einer Position, die auf der leitfähigen Schicht (300) ist und die der Schutzschicht (200) entspricht, befestigt ist, um das Verbindungsdurchgangsloch (210) abzudichten.

5. Mechanisches Verbindungsteil aus Magnesiumlegierung (10) nach Anspruch 4, wobei an einer Position, die auf der leitfähigen Schicht (300) ist und die der Übergangsschicht (400) entspricht, ein konkaver Abschnitt ausgebildet ist und der konkave Abschnitt mit einem Füllmaterial (600) gefüllt ist.

6. Mechanisches Verbindungsteil aus Magnesiumlegierung (10) nach Anspruch 5, wobei eine Außenoberfläche des Füllmaterials (600) bündig mit einer Außenoberfläche der leitfähigen Schicht (300) ist.

7. Mechanisches Verbindungsteil aus Magnesiumlegierung (10) nach einem der Ansprüche 1 bis 3, wobei
mindestens ein Teil der Übergangsschicht (400) in einer Höhe in den Magnesiumlegierungskörper (100) eingebettet ist und sich ein verbleibender Teil der Übergangsschicht (400) in dem Verbindungsdurchgangsloch (210) befindet;
sich die leitfähige Schicht (300) in dem Verbindungsdurchgangsloch (210) befindet; und
eine Beabstandung zwischen einer Innenseitenoberfläche des Verbindungsdurchgangslochs (210) und sowohl einer Seitenoberfläche der Übergangsschicht (400) als auch einer Seitenoberfläche der leitfähigen Schicht (300) ausgebildet ist und die Beabstandung mit dem Dichtungsmaterial (500) in einer radialen Richtung des Verbindungsdurchgangslochs (210) gefüllt ist, um das Verbindungsdurchgangsloch (210) abzudichten.

8. Mechanisches Verbindungsteil aus Magnesiumlegierung (10) nach Anspruch 7, wobei eine Außenoberfläche der Schutzschicht (200), eine Außenoberfläche des Dichtungsmaterials (500) und eine Außenoberfläche der leitfähigen Schicht (300) bündig miteinander sind.

9. Mechanisches Verbindungsteil aus Magnesiumlegierung (10) nach einem der Ansprüche 1 bis 3, wobei
mindestens ein Teil der Übergangsschicht (400) in einer Höhe in den Magnesiumlegierungskörper (100) eingebettet ist und das Verbindungsdurchgangsloch (210) mit einem verbleibenden Teil der Übergangsschicht (400) in einer radialen Richtung des Verbindungsdurchgangsloch (210) gefüllt ist, um das Verbindungsdurchgangsloch (210) abzudichten.

10. Mechanisches Verbindungsteil aus Magnesiumlegierung (10) nach Anspruch 9, wobei die Übergangsschicht (400) Folgendes umfasst:
eine erste Übergangsunterschicht (410), wobei die erste Übergangsunterschicht (410) in einem Bereich ausgebildet ist, in dem der Magnesiumlegierungskörper (100) mit einer Zwischenschicht (700) verbunden ist, und durch einen Teil der Zwischenschicht (700) und einen Teil des Magnesiumlegierungskörpers (100) in einer Höhe ausgebildet ist und mindestens ein Teil der ersten Übergangsunterschicht (410) in einer Höhe in den Magnesiumlegierungskörper (100) eingebettet ist;
eine zweite Übergangsunterschicht (420), die auf der ersten Übergangsunterschicht (410) ausgebildet ist, wobei die zweite Übergangsunterschicht (420) in einem Bereich ausgebildet ist, in dem die leitfähige Schicht (300) mit der Zwischenschicht (700) verbunden ist, und durch einen Teil der Zwischenschicht (700) und einen Teil der leitfähigen Schicht (300) in einer Höhe ausgebildet ist; und
wenn das Verbindungsdurchgangsloch (210) mit dem verbleibenden Teil der Übergangsschicht (400) in der radialen Richtung des Verbindungsdurchgangslochs (210) gefüllt ist, das Verbindungsdurchgangsloch (210) mit der ersten Übergangsunterschicht (410) und/oder der zweiten Übergangsunterschicht (420) in der radialen Richtung des Verbindungsdurchgangslochs (210) gefüllt ist, um das Verbindungsdurchgangsloch (210) abzudichten.

11. Mechanisches Verbindungsteil aus Magnesiumlegierung (10) nach Anspruch 1, wobei die Übergangsschicht (400) eine elektrisch leitfähige Klebeschicht ist.

12. Mechanisches Verbindungsteil aus Magnesiumlegierung (10) nach Anspruch 1, wobei ein Material des Magnesiumlegierungskörpers (100) eine beliebige von einer Magnesium-Zink-Legierung, einer Magnesium-Mangan-Legierung, einer Magnesium-Rhenium-Legierung und einer Magnesium-Lithium-Legierung ist.

13. Mechanisches Verbindungsteil aus Magnesiumlegierung (10) nach Anspruch 1, wobei die Schutzschicht (200) ein beliebiges von einer Mikrolichtbogenoxidkeramikschicht, einem Lederfilm oder einer Anodenschicht umfasst.

14. Elektronische Vorrichtung, umfassend mindestens ein mechanisches Verbindungsteil aus Magnesiumlegierung (10) nach einem der Ansprüche 1 bis 11.

15. Komponentenausbildungsverfahren, das dazu konfiguriert ist, das mechanische Verbindungsteil aus Magnesiumlegierung (10) nach einem der Ansprüche 1 bis 6 auszubilden, wobei das Verfahren Folgendes umfasst:
Abdecken eines Verbindungsdurchgangslochs (210) einer Schutzschicht (200) mit einer leitfähigen Schicht (300);
Schweißen der leitfähigen Schicht (300) und eines Magnesiumlegierungskörpers (100) an einer Position, die dem Verbindungsdurchgangsloch (210) entspricht, durch Ultraschallschweißen; und
Befestigen der Schutzschicht (200) und einer Position, die auf der leitfähigen Schicht (300) ist und die der Schutzschicht (200) entspricht, mithilfe eines Dichtungsmaterials (500).

## Revendications

1. Pièce mécanique de connexion en alliage de magnésium (10), comprenant :
un corps en alliage de magnésium (100) ;
une couche protectrice (200), dans laquelle la couche protectrice (200) enveloppe le corps en alliage de magnésium (100), un trou traversant de connexion (210) relié à une surface du corps en alliage de magnésium (100) et fourni à travers la couche protectrice (200), et une couche de transition (400) formée au niveau d'un fond du trou traversant de connexion (210) ;
une couche conductrice (300) formée sur la couche de transition (400), et la couche de transition (400) et la couche conductrice (300) sont utilisées pour une connexion électrique entre le corps en alliage de magnésium (100) et l'extérieur ; dans laquelle
le trou traversant de connexion (210) est scellé en utilisant la couche de transition (400) ou la couche conductrice (300) et d'un matériau d'étanchéité (500), afin d'isoler le corps en alliage de magnésium (100) de l'extérieur.

2. Pièce mécanique de connexion en alliage de magnésium (10) selon la revendication 1, dans laquelle la couche de transition (400) est formée, par soudage ultrasonique, par une partie de la couche conductrice (300) et une partie du corps en alliage de magnésium (100) au niveau d'une hauteur dans une région dans laquelle le corps en alliage de magnésium (100) est connecté à la couche conductrice (300).

3. Pièce mécanique de connexion en alliage de magnésium (10) selon la revendication 2, dans laquelle un point de soudage du soudage par ultrasons est situé dans une région correspondant au trou traversant de connexion (210).

4. Pièce mécanique de connexion en alliage de magnésium (10) selon l'une quelconque des revendications 1 à 3, **caractérisée en ce qu'**il existe au moins une couche de transition (400), au moins une partie de l'au moins une couche de transition (400) au niveau d'une hauteur est intégrée dans le corps en alliage de magnésium (100), et une couche conductrice (300) commune recouvrant le trou traversant de connexion (210) est formée sur l'au moins une couche de transition (400) ; et
le matériau d'étanchéité (500) est une couche adhésive, et la couche adhésive est fixée entre la couche protectrice (200) et une position qui se trouve sur la couche conductrice (300) et qui correspond à la couche protectrice (200), pour sceller le trou traversant de connexion (210).

5. Pièce mécanique de connexion en alliage de magnésium (10) selon la revendication 4, dans laquelle une partie concave est formée au niveau d'une position qui se trouve sur la couche conductrice (300) et qui correspond à la couche de transition (400), et la partie concave est remplie d'un matériau de remplissage (600).

6. Pièce mécanique de connexion en alliage de magnésium (10) selon la revendication 5, dans laquelle une surface externe du matériau de remplissage (600) est affleurante avec une surface externe de la couche conductrice (300).

7. Pièce mécanique de connexion en alliage de magnésium (10) selon l'une quelconque des revendications 1 à 3, dans laquelle
au moins une partie de la couche de transition (400) au niveau d'une hauteur est intégrée dans le corps en alliage de magnésium (100), et une partie restante de la couche de transition (400) est située dans le trou traversant de connexion (210) ;
la couche conductrice (300) est située dans le trou traversant de connexion (210) ; et
un espace est formé entre une surface latérale interne du trou traversant de connexion (210) et à la fois une surface latérale de la couche de transition (400) et une surface latérale de la couche conductrice (300), et l'espace est rempli du matériau d'étanchéité (500) dans une direction radiale du trou traversant de connexion (210), pour sceller le trou traversant de connexion (210).

8. Pièce mécanique de connexion en alliage de magnésium (10) selon la revendication 7, dans laquelle une surface externe de la couche protectrice (200), une surface externe du matériau d'étanchéité (500) et une surface externe de la couche conductrice (300) sont affleurantes les unes avec les autres.

9. Pièce mécanique de connexion en alliage de magnésium (10) selon l'une quelconque des revendications 1 à 3, dans laquelle au moins une partie de la couche de transition (400) au niveau d'une hauteur est intégrée dans le corps en alliage de magnésium (100), et le trou traversant de connexion (210) est rempli d'une partie restante de la couche de transition (400) dans une direction radiale du trou traversant de connexion (210), pour sceller le trou traversant de connexion (210).

10. Pièce mécanique de connexion en alliage de magnésium (10) selon la revendication 9, dans laquelle la couche de transition (400) comprend :
une première sous-couche de transition (410), dans laquelle la première sous-couche de transition (410) est formée dans une région dans laquelle le corps en alliage de magnésium (100) est connecté à une couche intermédiaire (700), et est formée par une partie de la couche intermédiaire (700) et une partie du corps en alliage de magnésium (100) au niveau d'une hauteur, et au moins une partie de la première sous-couche de transition (410) au niveau d'une hauteur est intégrée dans le corps en alliage de magnésium (100) ;
une seconde sous-couche de transition (420) formée sur la première sous-couche de transition (410), dans laquelle la seconde sous-couche de transition (420) est formée dans une région dans laquelle la couche conductrice (300) est connectée à la couche intermédiaire (700), et est formée par une partie de la couche intermédiaire (700) et une partie de la couche conductrice (300) au niveau d'une hauteur ; et
lorsque le trou traversant de connexion (210) est rempli de la partie restante de la couche de transition (400) dans la direction radiale du trou traversant de connexion (210), le trou traversant de connexion (210) est rempli de la première sous-couche de transition (410) et/ou de la seconde sous-couche de transition (420) dans la direction radiale du trou traversant de connexion (210), pour sceller le trou traversant de connexion (210).

11. Pièce mécanique de connexion en alliage de magnésium (10) selon la revendication 1, dans laquelle la couche de transition (400) est une couche adhésive électroconductrice.

12. Pièce mécanique de connexion en alliage de magnésium (10) selon la revendication 1, dans laquelle un matériau du corps en alliage de magnésium (100) est l'un quelconque d'un alliage magnésiumzinc, d'un alliage magnésium-manganèse, d'un alliage magnésiumrhénium et d'un alliage magnésium-lithium.

13. Pièce mécanique de connexion en alliage de magnésium (10) selon la revendication 1, dans laquelle la couche protectrice (200) comprend l'un quelconque d'une couche de céramique d'oxyde micro-arc, d'un film de cuir et d'une couche d'anode.

14. Dispositif électronique, comprenant au moins une pièce mécanique de connexion en alliage de magnésium (10) selon l'une quelconque des revendications 1 à 11.

15. Procédé de formage de composant, configuré pour former la pièce mécanique de connexion en alliage de magnésium (10) selon l'une quelconque des revendications 1 à 6, dans lequel le procédé comprend :
le recouvrement d'un trou traversant de connexion (210) d'une couche protectrice (200) avec une couche conductrice (300) ;
le soudage de la couche conductrice (300) et d'un corps en alliage de magnésium (100) au niveau d'une position correspondant au trou traversant de connexion (210) par soudage ultrasonique ; et
la fixation, en utilisant un matériau d'étanchéité (500), de la couche protectrice (200) et d'une position qui se trouve sur la couche conductrice (300) et qui correspond à la couche protectrice (200).
